# EUROPEAN PATENT SPECIFICATION

(11) **EP 1 602 058 B1**
(45) Date of publication and mention of the grant of the patent: **05.07.2006**
(21) Application number: 04737299.0
(22) Date of filing: 19.02.2004
(51) Int. Cl.: G06K 7/00, G06K 19/077, G06K 13/08

(54) **Connector for a smart card, comprising an integrated drawer/slider for the card**
Verbinder für eine Chipkarte mit integrierter Lade/Schiebevorrichtung
Connecteur pour carte à microprocesseur ayant un tiroir/glissière intégrées

(30) Priority: 10.03.2003 FR 0302939
(43) Date of publication of application: 07.12.2005
(73) Proprietor: ITT MANUFACTURING ENTERPRISES, INC., Wilmington, Delaware 19801 (US)
(72) Inventor: BRICAUD, Hervé, F-39100 Dole (FR); FERRATON, David, F-39100 Crissey (FR); PIZARD, Yves, F-39100 Dole (FR)
(74) Representative: Kohn, Philippe
(86) International application number: PCT/EP2004/050163
(87) International publication number: WO 2004/081848

(56) References cited:
- EP-A- 0 468 146
- WO-A-02/089040
- FR-A- 2 633 754

## Description

The present invention relates to an electrical connector for an electronic memory card of the chip card type and for a card of high storage capacity.

The invention relates more particularly to an electrical connector for a contact-type smart memory card of rectangular general shape having, on its lower main face, a series of conducting pads.

For a chip card, this may be of the standardized SIM or MICROSIM type.

In the case of a card of high storage capacity, the card may, in certain cases, include, in one of its longitudinal edges, a blocking notch for longitudinally blocking card by complementary blocking means housed in the notch when the card is in the contact or operating position in a connector.

The invention thus relates to an electrical connector both for connecting a SIM or MICROSIM card and for connecting a card of high storage capacity called an SD (Secure Digital) card.

All the features and performance characteristics of an SD card are defined by the documents issued by SDCA (SD Card Association), the address of which is 53 Muckelemi St., PO Box 189, San Juan Baustista, CA 95045-0189 - USA. This SD card belongs to the family of MMC (Multimedia Card) cards.

The overall dimensions of the MMC and SD cards are identical when the SD card is of small thickness (1.4 mm), with the notable exception of the thickness when the SD card is thicker (2.1 mm), this increase corresponding to the greater memory capacity of such a card.

The SD card also has, in its right longitudinal edge, a notch which makes it possible, in certain applications, for the SD card to be longitudinally blocked by complementary means engaged in the blocking notch.

The invention also relates to a connector for connecting another card of high storage capacity called an MSD (Memory Stick Duo) card sold by Sony.

All the features and performance characteristics of the MSD card are defined in the document published by Sony Corporation entitled *"Memory Stick Standard - Memory Stick Duo Format Specifications, Version 1.0 - August 2001".*

The MSD card also includes, in its left longitudinal edge, a notch that makes it possible for the card to be longitudinally blocked by complementary means engaged in the blocking notch. However, the other right longitudinal edge does not include a write protect device, this function being provided by means that are actuated by a switch carried by the card.

It will also be noted that the notch on the MSD card has a rounded profile and does not extend over the entire height or thickness of the card, that is to say it opens only onto its lower face and is upwardly blind.

In general, the placing of a card in the operating position, in which the card is electrically connected, and its extraction by the user after it has been used make use of means that are incorporated into an assembly for connecting the card, comprising in particular means for ejecting the card, this assembly having to be as compact as possible and inexpensive, in particular comprising a small number of parts.

Within the context of an application with a portable case, document FR-A-2 681 711 has already proposed a receiving device for a card of the type that includes a case, one face of which defines a window giving access to a card-holder carriage that has a compartment for housing the card and can slide between a rear rest position, in which the card may be placed in the compartment or extracted therefrom, and a forward operating position in which the conducting pads on the card cooperate with the free contact ends of electrical contact blades that belong to an electrical connector provided in the case.

In this design, extraction of the card requires the card-holder carriage to be gripped manually by its lateral faces so as to release the means of locking the carriage in the operating position and so as to return it to its rear rest position in which it is possible to gain access to the card in its compartment.

Such a design therefore no longer allows the card to be extracted in a simple manner from the receiving device, especially when performed "blind".

Document WO-A-96/02893 proposes, for remedying these drawbacks, an assembly for connecting a card of the type comprising a body that has a face giving access to a carriage for housing the card and which can slide longitudinally over the body between a rear rest position, for inserting or extracting the card, and a forward operating position, and of the type that includes stop means for defining the rest position of the carriage and means of locking the carriage in the operating position, against the elastic force applied to the means for returning the latter to its rear rest position.

Depending on the design mentioned in that document, the means of locking the card-holder carriage are of the type with automatic tripping when the carriage reaches its operating position and of the type whose release is brought about by forward displacement of the carriage against the elastic return force, beyond its operating position, that is to say in a design called "push on/push off".

More precisely, the locking means are of the type comprising a locking hook having an end spur which, when the carriage is near its operating position, cooperates with a facing locking cam.

A compact design of such an assembly for connecting a card, and especially of the type for a MICROSIM-type card, was proposed in document WO-A-00/70532. This design constitutes a first attempt at reducing the size of the assembly in all its dimensions, with a view to making it easier to integrate it into a small electronic appliance, such as a GSM-type cellular telephone, or any other electronic appliance requiring the connection of electronic memory cards, such as a PDA (Personal Digital Assistant).

Thus, that document proposes an assembly in which the end spur of the locking hook of the locking device lies in a direction parallel to the sliding plane of the card and of the carriage, the locking cam being formed in a surface portion of the carriage perpendicular to the general plane of the card.

However, the compact assembly proposed in that document does not include means for retaining the card in the use position.

Document WO-A-01/29934 proposes an embodiment of a connector for an MMC-type card that includes a carriage for ejecting the card and also for retaining the card by a rear lip of the carriage, which lip cooperates with the rear transverse edge of the card, in a design, similar to the card retention means, proposed by the Applicant in document WO-A-99/63474.

Document WO-A-02/073524 discloses a design of an electrical connector for housing any type of MMC card, and especially a card of the SD type, that is particularly compact but does not incorporate means for ejecting the card out of the connector.

Document WO-A-02/089040 proposes an improved design of a compact assembly for connecting a card, especially of the SD type or MSD type, which includes means for ejecting the card, which may be produced in the form of a single assembly constituting the actual electrical connector for connecting the card, while still fulfilling the function of blocking the card in the operating position.

Document WO-A-02/089040 discloses an electrical connector with a suppoort and a slide for ejecting a card which does not provide means for securely securing a card in a card holder in an electrical connector. FR-A-2.633.754 and EP-A-0.468.146 also belong to the state of the art.

The connector thus proposed for a memory card having, in one of its longitudinal edges, a notch for longitudinally blocking the card by complementary blocking means housed in the notch, comprises a slide for ejecting the card, which can slide longitudinally over the body between a rear rest position defined by stop means, towards which position the slide is elastically returned and in which position the card may be inserted or extracted, and a forward operating position in which the electrical contact pads on the card cooperate with the electrical contact elements, and means for locking the slide in the operating position, against the elastic return force for returning the slide to the rest position, which are of the automatic tripping type when the slide reaches its operating position and of the type whose release is brought about by forward displacement of the slide against the elastic return force, beyond its operating position, the card-blocking means being incorporated into the slide.

In all the known connector designs having automatic ejection and locking means of the "push on/push off" type, the electronic equipment into which the connector is incorporated has a slot that remains open, thus greatly detracting from the aesthetic appearance of the equipment, and also constitutes an orifice for the ingress of dust.

Thus, it is an object of the invention to propose a connector that incorporates the "push on/push off"-type means and also incorporates a structural element that constitutes a gate for closing off the slot in the equipment.

It is also an object of the present invention to improve the ergonomics of a connector with a card ejection slide of the "push on/push off" type so as to allow it to be incorporated into a case of the electronic appliance, defining a slot giving access to a "trigger" for initiating card extraction and then, when the card is in the ejected position, allowing the card to be handled in a controlled manner.

For this purpose, the invention proposes an electrical connector of the type:
- comprising a support made of an insulating material that defines a housing for a contact-type smart memory card of rectangular general shape having, on its lower main face, a series of conducting pads, each pad being capable of cooperating with an upper contact end of an electrical contact blade, placed in the bottom face of the housing of the support;
- comprising a slide for ejecting the card:
   - which can slide longitudinally over the body between an ejected rear rest position towards which it is elastically returned and in which the card may be inserted, or extracted, and a locked forward operating position in which the electrical contact pads on the card cooperate with the electrical contact blades
   - and which include an active transverse edge with which the front transverse edge of the card cooperates in order to determine the active position of the card with respect to the slide; and
- comprising means for locking the slide in the front operating position, against the elastic return force for returning the slide into the rest position, which means are of the type with automatic tripping when the slide reaches its operating position and of the type in which release is caused by forward displacement of the slide, beyond its operating position, against the elastic return force;
characterized in that the slide constitutes a card-holder carriage which, at its rear longitudinal end, carries a retractable bar which normally lies in a longitudinal card retention position, in the active position of the carriage, towards which position it is elastically returned and in which the bar lies facing the rear transverse edge of the card.

By virtue of this design, the element forming the retention bar placed at the rear longitudinal end of the card-holder carriage constitutes a gate for closing off the slot, which gate, in the locked position of the carriage, automatically occupies the position in which it closes off the slot.

In addition, the function of the card retention bar in the card-holder carriage allows a connector according to the invention to be used whatever the type of card, that is to say whether or not it has a blocking notch in the longitudinal position, provided that the card is held in a defined longitudinal position in the carriage which is itself locked in the operating position in the connector.

According to other features of the invention:
- the retention bar is mounted so as to move vertically between its retention high position, towards which it is elastically returned, and a retracted low position in which the card can be extracted out of the carriage, in a horizontal overall direction parallel to the general plane of the card, so that the extraction of the card from the connector is effected in a first step of ejection of the carriage and then in a second step of card extraction from the slider;
- the retention bar has a front transverse retention face which, in the retention high position of the card, lies vertically substantially facing the rear transverse edge of the card;
- the card-holder carriage is equipped with a spring for assisting the extraction of the card from the card-holder carriage;
- the spring is carried by the card-holder carriage and cooperates with the front transverse edge of the card in order to apply a force to it that urges the card longitudinally rearwards by bearing against the retention bar when the latter is in the high card retention position in the card-holder carriage;
- the retention bar is carried by the rear longitudinal ends of two elastically deformable arms of the card-holder carriage which elastically returns the said bar into its high position;
- the card-holder carriage has an ejection slide and a card-holder slider, in the general form of a horizontal plate which lies beneath the face of the card, which slider is linked so as to undergo longitudinal translation with the ejection slide;
- the elastically deformable arms belong to the card-holder slider;
- the connector includes retractable means for temporarily blocking the retention bar in the retracted low position;
- the retention bar belongs to a rear piece forming a gate which, in the front operating position of the card, closes off an opening belonging to a case element forming part of an item of electronic equipment in which the connector is mounted;
- it is provided with stop means which limit the downward vertical retraction travel of the gate-forming retention bar when the card-holder slider is in the ejected rear position;
- the retention bar constitutes an actuating bar on which a user acts by pushing longitudinally forwards in order to lock or release the card-holder carriage;
- the forward travel for locking the card-holder carriage is less than its forward travel for unlocking it;
- in the locked forward position of the card-holder carriage, the rear transverse face of the gate is approximately flush with the external face of the equipment in which the said opening is formed;
- the retention bar is an externally metallized plastic moulded part or a metal injection-moulded part;
- the connector includes a switch which comprises a moving contact blade carried by the carriage, which cooperates with one or both of the two, front and rear, fixed blades carried by the insulating body in order to guarantee that, at any point in the card insertion/extraction cycle, the switch always opens before the opening of the electrical circuits and always closes after the closing of the electrical circuits, thus protecting the integrated circuits of the card.

Other features and advantages will become apparent on reading the detailed description that follows, for the understanding of which reference will be made to the appended drawings in which:
- Figure 1 is a bottom left front three-quarter perspective view of a Memory Stick Duo card;
- Figure 2 is a top left rear three-quarter perspective view illustrating a connector according to the invention, which is shown with a card in what is called the locked position, in the operating position of the card in the connector;
- Figure 3 is a bottom view of Figure 2;
- Figure 4 and Figure 5 are views similar to those of Figures 2 and 3 at another viewing angle;
- Figure 6 is a view similar to that of Figure 2, without the card;
- Figure 7 is a view similar to that of Figure 2, without the protective cover;
- Figure 8 is a view similar to that of Figure 2, in which the card-holder carriage and the card are in what is called the pushed-in position, that is to say after maximum forward travel during insertion, for the purpose of unlocking, or during unlocking;
- Figure 9 is a view similar to that of the previous figure, with neither the card nor the cover;
- Figure 10 is a view similar to the previous one, at another viewing angle;
- Figure 11 is a view similar to that of Figure 2, in which the card and the carriage are shown in the ejected rear longitudinal position, with the gate-forming retention bar in the high longitudinal card retention position in the carriage;
- Figure 12 is a view similar to that of Figure 10, in which the carriage is in the ejected position;
- Figure 13 is a view similar to that of Figure 2, in which the card and the carriage are shown in the ejected rear longitudinal position with the gate-forming retention bar in the retracted low, or lowered, position;
- Figure 14 is a view similar to that of Figure 2, in which the card and the carriage are shown in the ejected rear longitudinal position, the bar in the lowered position and the card in the extracted position outside the carriage;
- Figure 15 is a view similar to that of Figure 8, without the protective cover;
- Figure 16 is a view similar to that of Figure 11, without the protective cover;
- Figure 17 is a view similar to that of Figure 14, without the protective cover;
- Figure 18 is a view similar to that of Figure 14, without the protective cover;
- Figure 19 is a longitudinal sectional view of Figure 2;
- Figure 20 is a cross-sectional view of Figure 2;
- Figure 21 is a longitudinal sectional view of Figure 8;
- Figure 22 is a longitudinal sectional view of Figure 11;
- Figure 23 is a longitudinal sectional view of Figure 13;
- Figure 24 is a longitudinal sectional view of Figure 14;
- Figure 25 is a view similar to that of Figure 9, without the card slider that bears the gate-forming bar at its rear longitudinal end;
- Figure 26 is a view similar to that of Figure 25 of just the insulator body;
- Figure 27 is a bottom view of the insulator of Figure 26;
- Figure 28 is a view of the sliding slider of Figure 9 with its gate-forming rear bar, this bar being shown in its high rest position towards which it is elastically returned;
- Figure 29 is a view similar to that of Figure 28 of just the slider;
- Figure 30 is a rear perspective view of the gate-forming bar;
- Figure 31 is a bottom view of Figure 31;
- Figure 32 is a view of just the ejection slide of Figure 9;
- Figure 33 is a view similar to that of Figure 33 at another viewing angle;
- Figures 34, 35 and 36 are views similar to those of Figures 33, 7 and 18, which illustrate a first alternative embodiment of the carriage incorporating a card extraction spring;
- Figures 37, 38 and 39 are views similar to those of Figures 33, 7 and 18, which illustrate a second alternative embodiment of the carriage incorporating a card extraction spring;

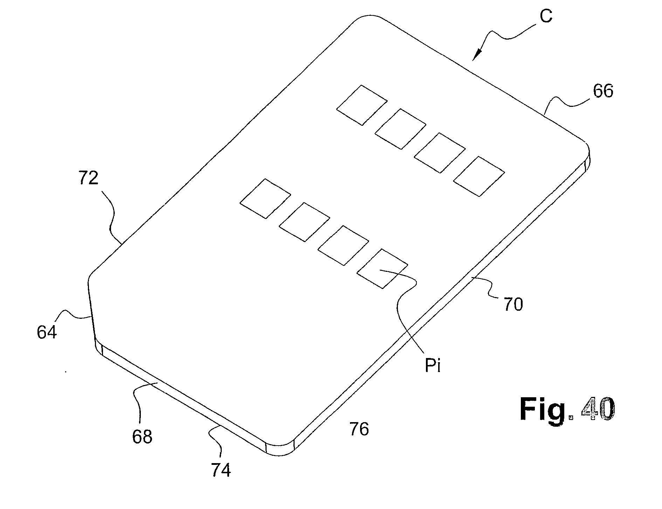

- Figure 40 is a bottom left rear three-quarter perspective view of a MICROSIM card;

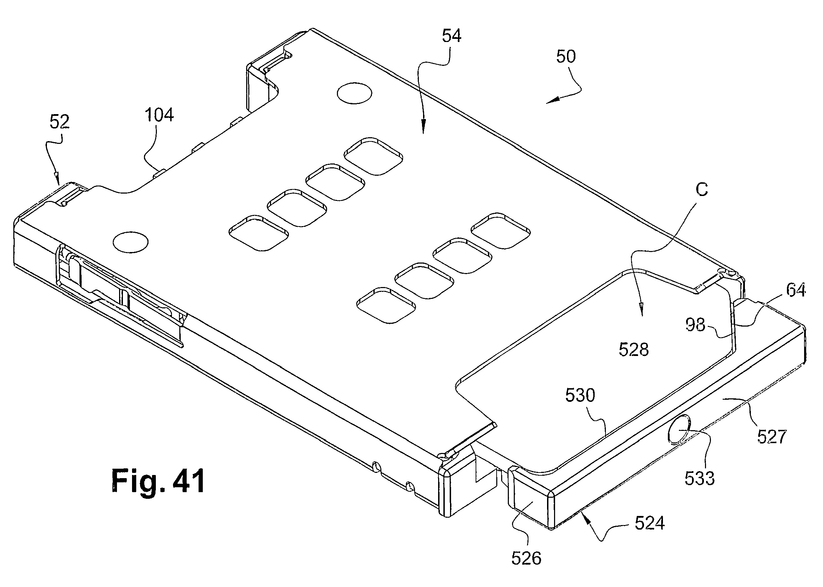

- Figure 41 is a view similar to that of Figure 2 of a connector according to the invention for a MICROSIM card as shown in Figure 40;

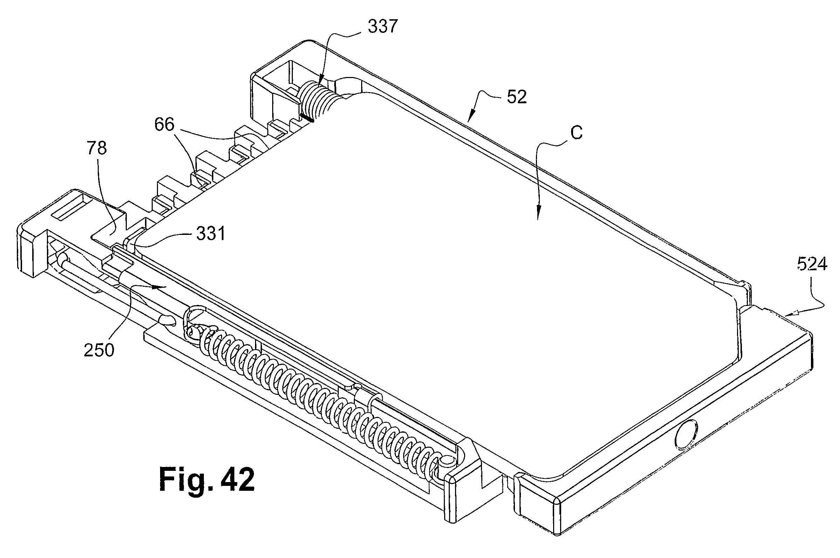

- Figure 42 is a view of the connector of Figure 41 without the cover;

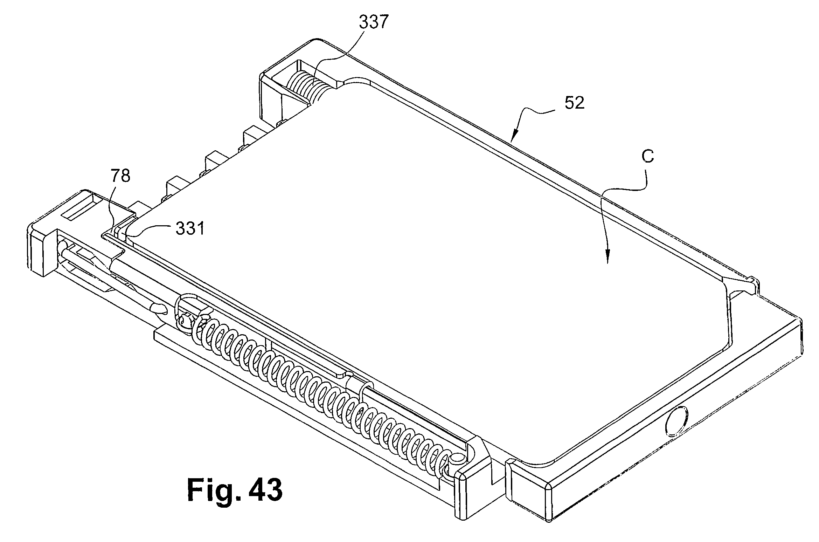

- Figure 43 is a view similar to that of Figure 42 with the carriage in the pushed-in position;

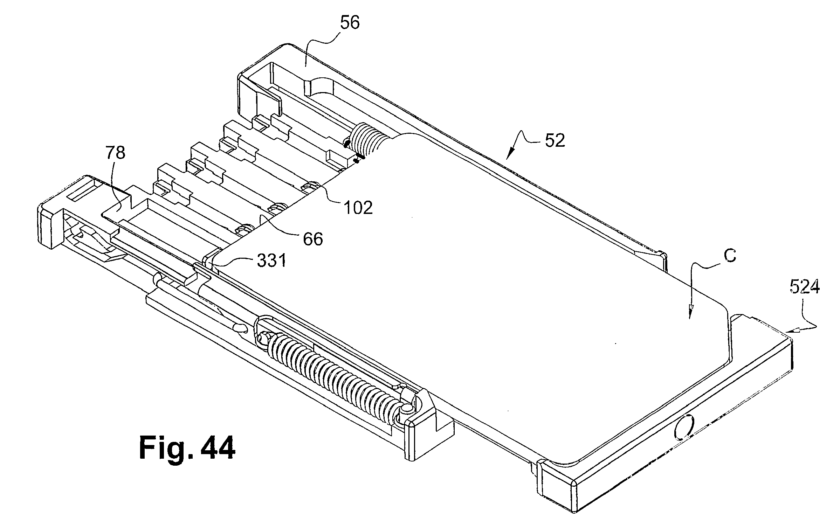

- Figure 44 shows the connector with its carriage in the ejected rear position;

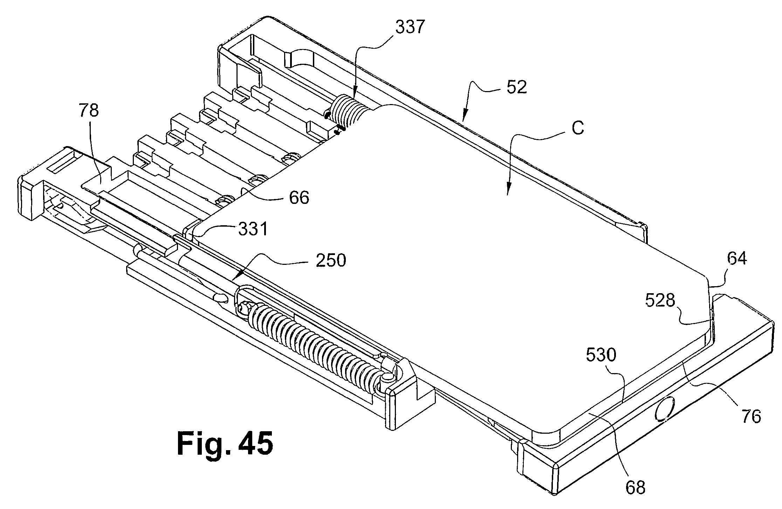

- Figure 45 shows the carriage in the ejected rear position and the gate in the retracted lowered position;

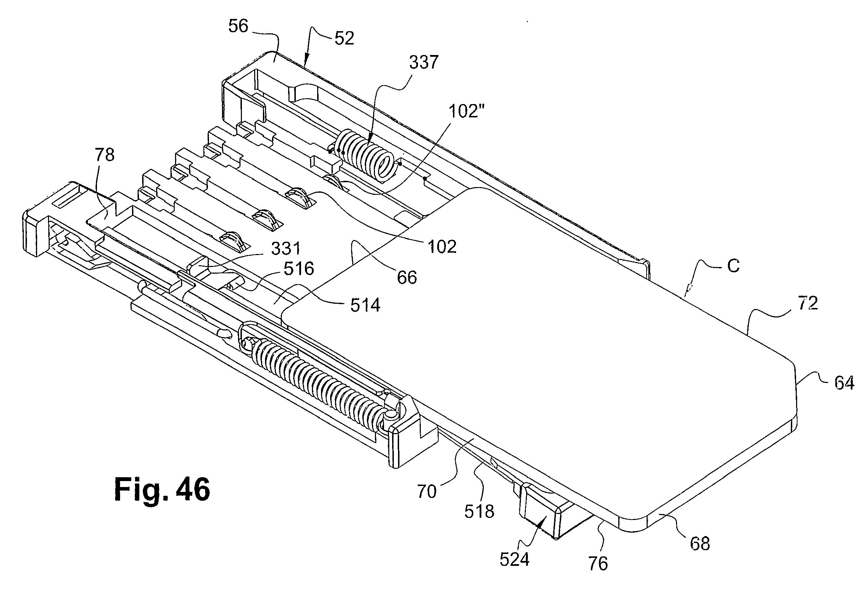

- Figure 46 shows the MICROSIM card during extraction from the slider;

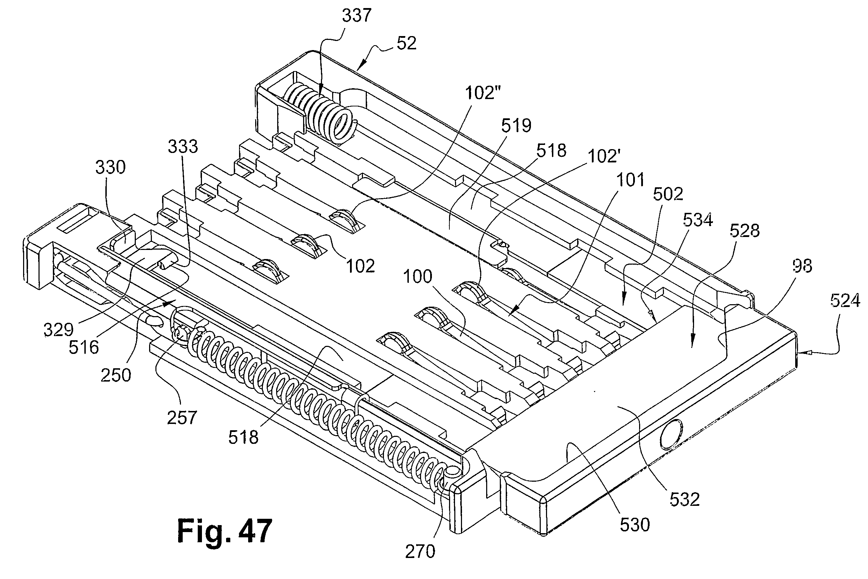

- Figure 47 is similar to the view of Figure 42, without the MICROSIM card;

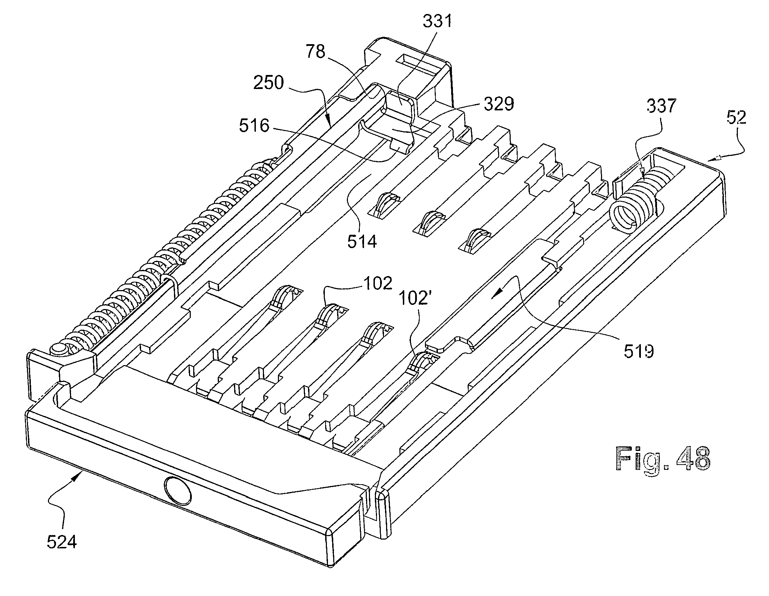

- Figure 48 is a view similar to that of Figure 47 at another viewing angle;

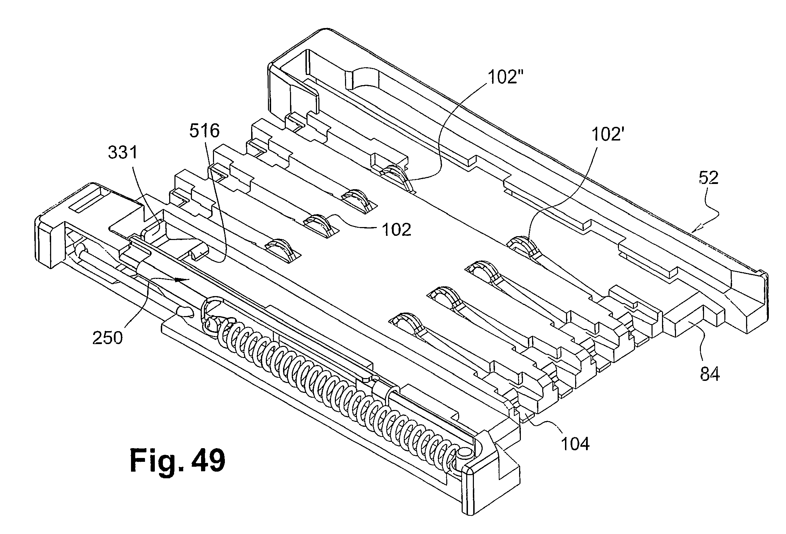

- Figure 49 is a view similar to that of Figure 47 without the slider and its gate;
- Figure 50 is a perspective view of just the insulator of the connector;
- Figures 51 and 52 are views similar to Figures 28 and 29 of the slider;
- Figures 53 and 54 are top and bottom perspective views of just the gate-forming card retention bar;
- Figures 55 and 56 are perspective views of the slide for ejecting the MICROSIM card;
- Figure 57 is a top left rear three-quarter perspective view of an SD card with a thickness of 1.4 mm;
- Figure 58 is a view similar to that of Figure 2, which shows a third embodiment of a connector according to the invention for the SD card shown in Figure 57;
- Figure 59 is a view similar to that of Figure 58 of the connector at another viewing angle;
- Figure 60 is a bottom view of Figure 58;
- Figure 61 is a view similar to that of Figure 58 with the slide and the slider in the ejected rear position;
- Figure 62 is a view similar to that of Figure 61 without the card;
- Figures 63 and 64 are views similar to those of Figures 61 and 62 in which the card is in the process of being extracted from the slider with the gate in the retracted lowered position;
- Figures 65 and 66 are views similar to that of Figure 58, without the cover and with neither the cover nor the card, respectively;
- Figure 67 is a view similar to that of Figure 66 at another viewing angle;
- Figure 68 is a view similar to that of Figure 64 at another viewing angle and without the cover;
- Figure 69 is a longitudinal sectional view of the connector with the card, the carriage in the locked position;
- Figure 70 is a view similar to the previous one, in the pushed-in forward position;
- Figure 71 is a similar view with the slider and the card in the ejected rear position;
- Figure 72 is a similar longitudinal sectional view with the lowered gate and the card in the process of being extracted from the slider;
- Figure 73 is a view similar to that of Figure 72 without the card;
- Figures 74 and 75 are two perspective views of the insulator body of the connector;
- Figure 76 is a top left rear three-quarter perspective view of the card ejection slider, without the gate;
- Figure 77 is a top left front three-quarter perspective view of the gate associated with the slider of Figure 76;
- Figure 78 is a view similar to that of Figure 77 at another viewing angle;
- Figure 79 is a bottom perspective view of the gate illustrated in Figure 77;
- Figure 80 is a schematic perspective view of a radio telephone incorporating a connector according to the third embodiment, the latter being shown in the ejected position of the slider and without the card;
- Figure 81 is a detail, on a larger scale, of Figure 80 in which the connector is shown in the closed and locked position of the slider;
- Figure 82 is a view similar to that of Figure 2 of a connector according to the invention in a fourth embodiment, suitable for an SD card of large thickness (2.1 mm);
- Figure 83 is a bottom view of Figure 82;
- Figure 84 is a view similar to that of Figure 82, without the cover;
- Figure 85 is a view similar to that of Figure 84 at another viewing angle;
- Figure 86 is a view similar to that of Figure 85 with the carriage in the ejected rear position;
- Figure 87 is a view similar to that of Figure 86 with the gate in the lowered position and blocked in this position;
- Figure 88 is a view similar to that of Figure 87 with a card;
- Figure 89 is a top view of the insulator body of the connector;
- Figure 90 is a top perspective view of the insulator body of Figure 89;
- Figure 91 is a longitudinal sectional view with the slider in the ejected rear position and the gate in the retracted low position and temporarily blocked;
- Figure 92 is a view similar to the previous one with the card in the process of being extracted;
- Figure 93 is a perspective view of the slider in two parts with its gate;
- Figure 94 if a view similar to the previous one, which illustrates the slider without the gate;
- Figure 95 is a perspective view of the upper constituent part of the body of the slider;
- Figure 96 is a perspective view of the lower constituent part of the slider;
- Figures 97 and 98 are two perspective views of the gate;
- Figure 99 is a perspective view of the ejection slide;
- Figure 100 is a top view of an alternative embodiment of a connector according to the invention for a MICROSIM card, the contact blades of which have output ends of the "solderless" type;
- Figure 101 is a longitudinal sectional view on line A-A of Figure 100;
- Figure 102 is an end view looking along the direction of the arrow F102 in Figure 100; and
- Figure 103 is a detail looking along the direction of the arrow F103 of Figure 49, which illustrates the design of the heart-shaped cam for obtaining dissymmetry and a safety overtravel at unlocking.

In the description that follows, identical, similar or analogous components will be denoted by the same reference numbers.

By non-limiting convention, the terms "lower", "upper", "front" and "rear" will be adopted when referring to the figures.

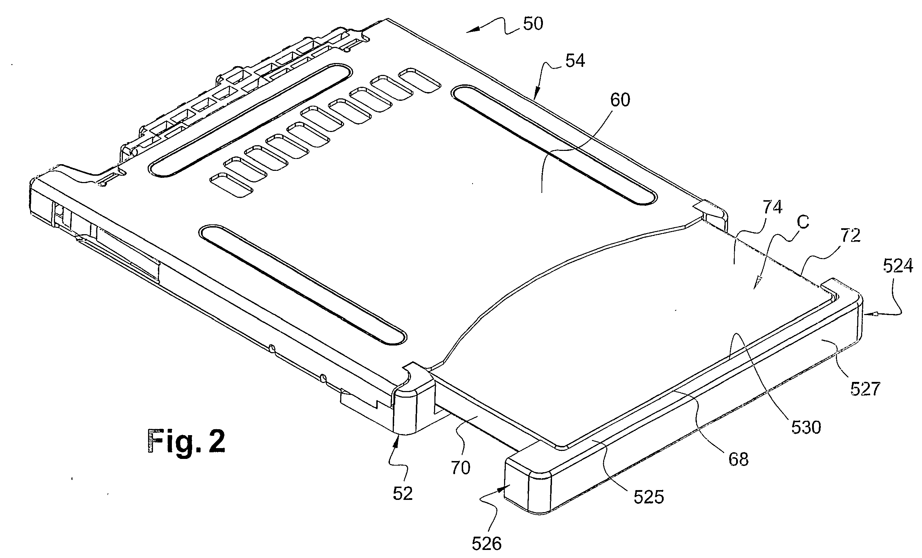

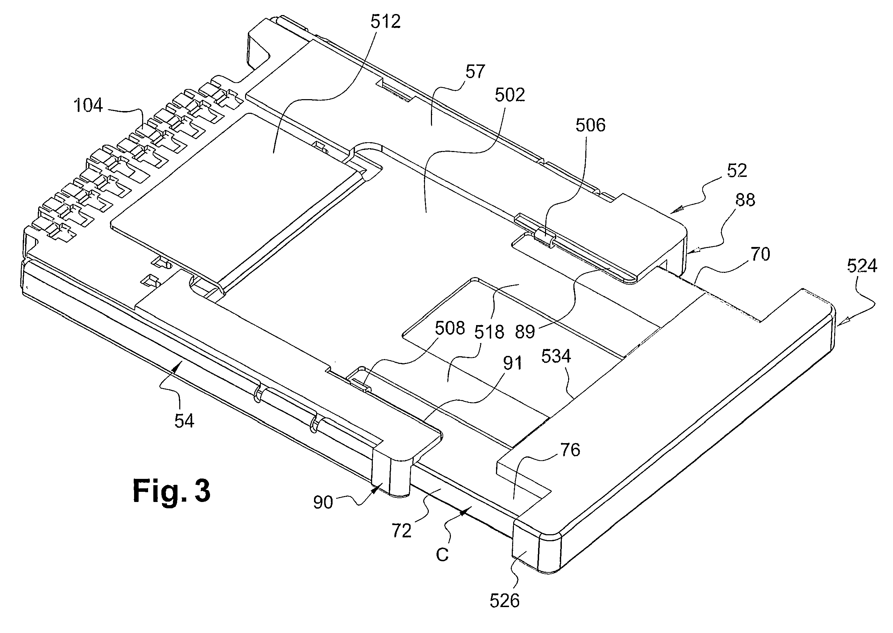

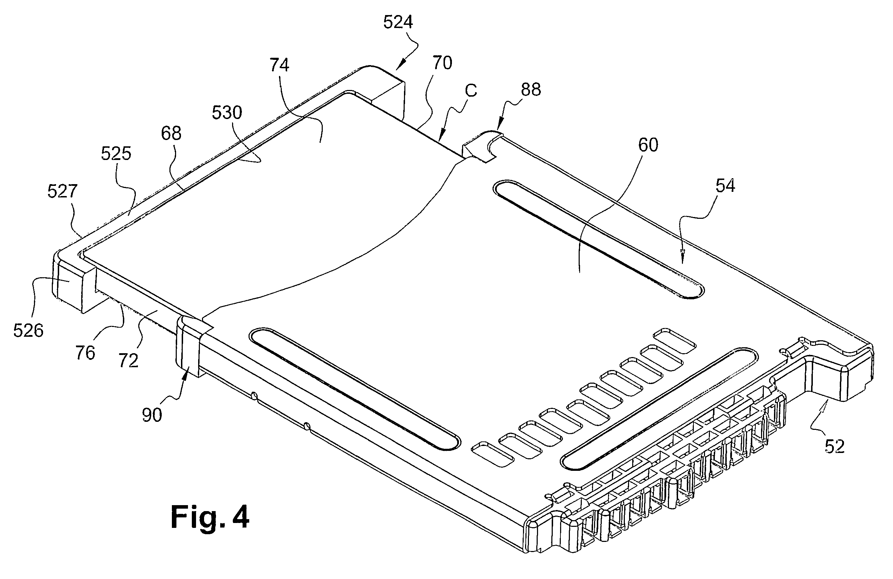

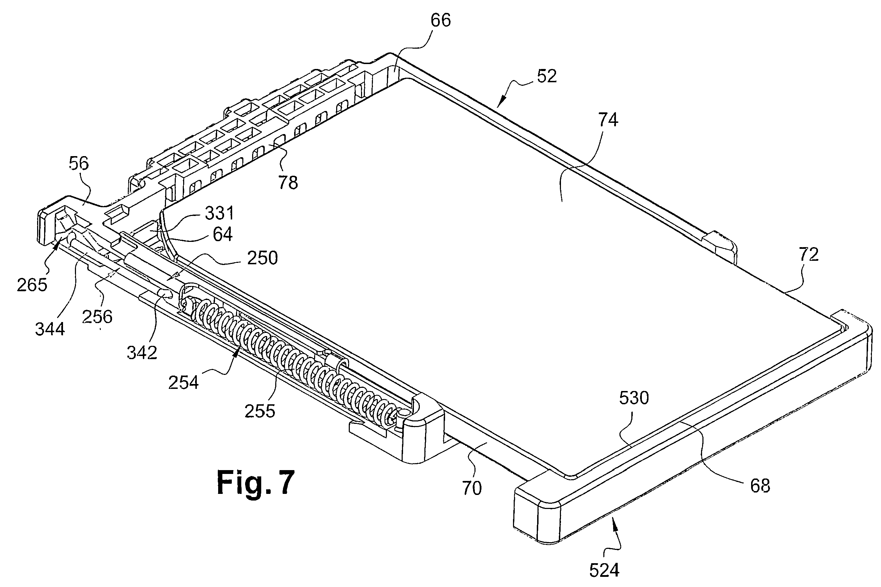

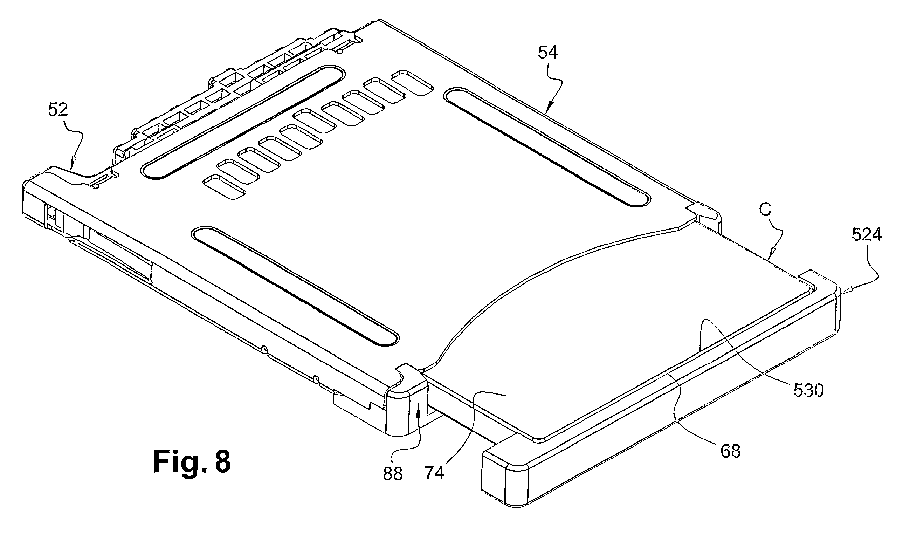

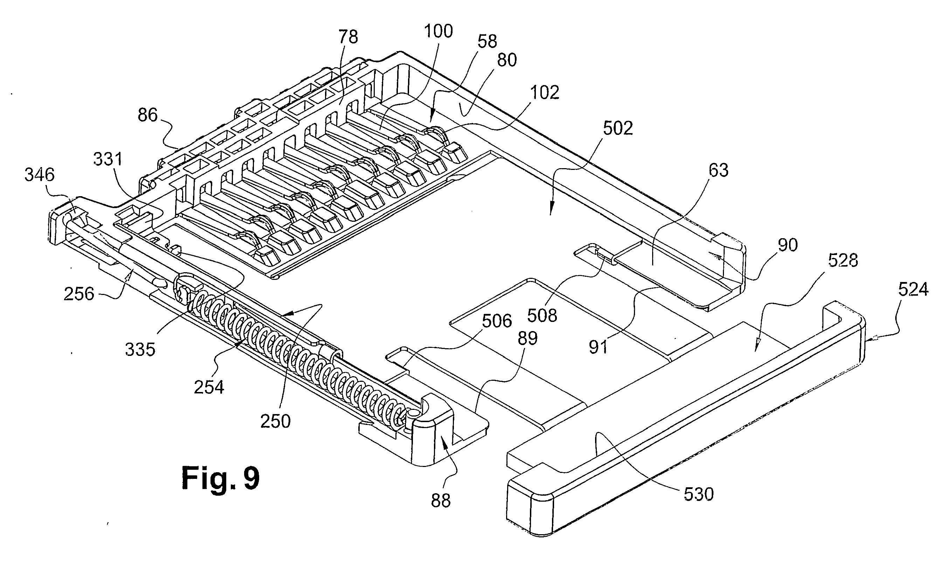

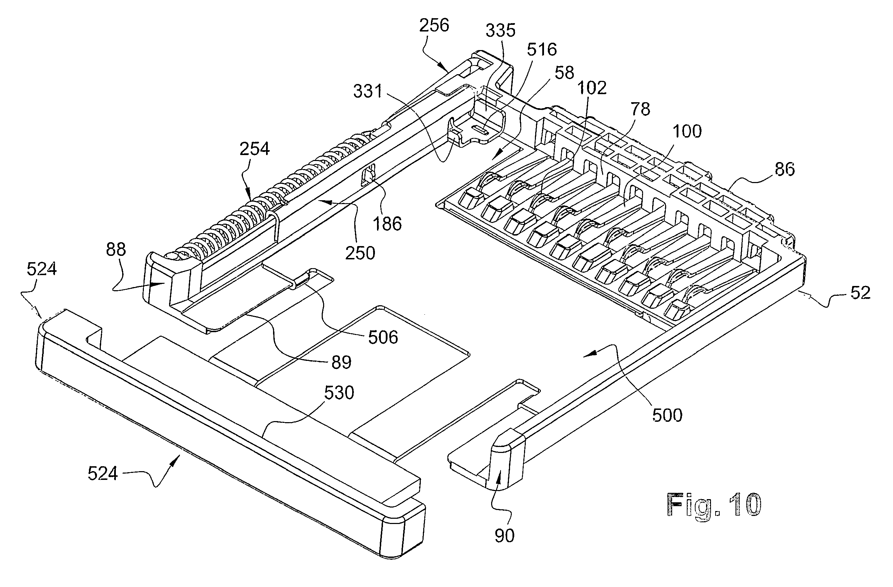

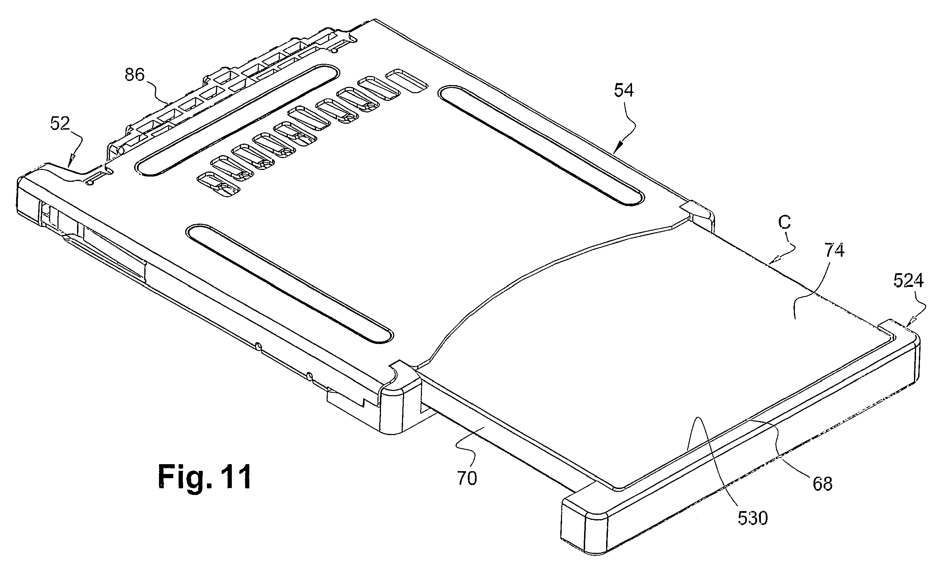

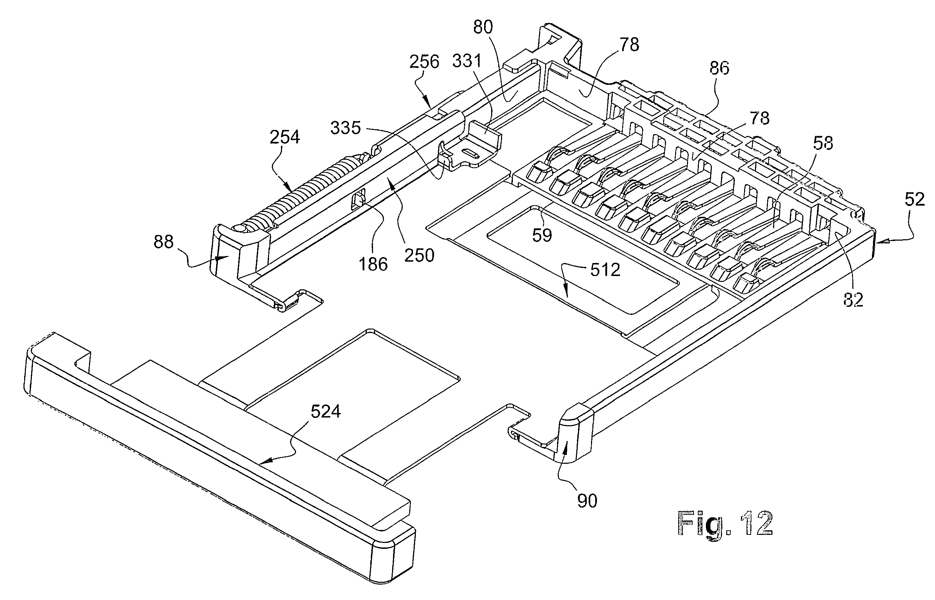

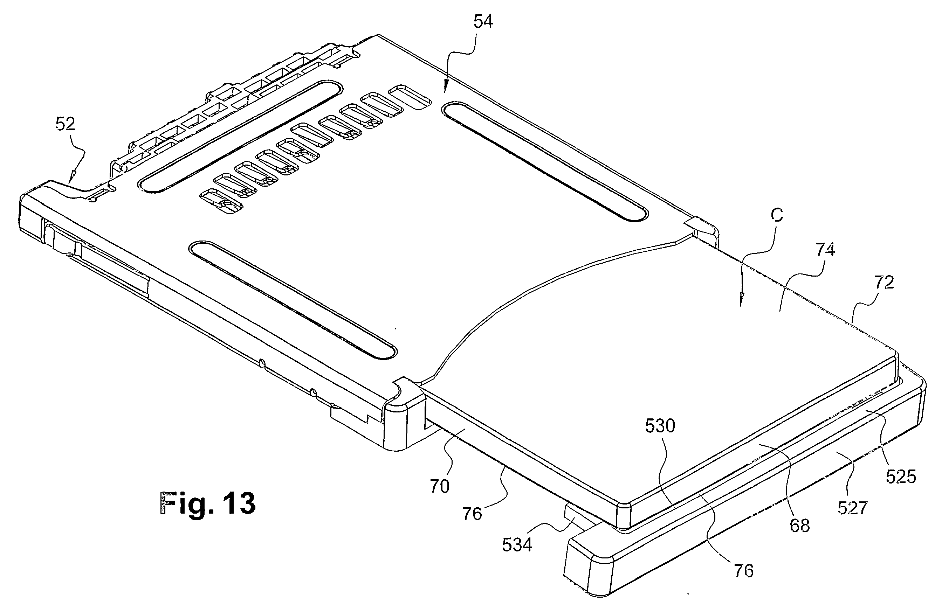

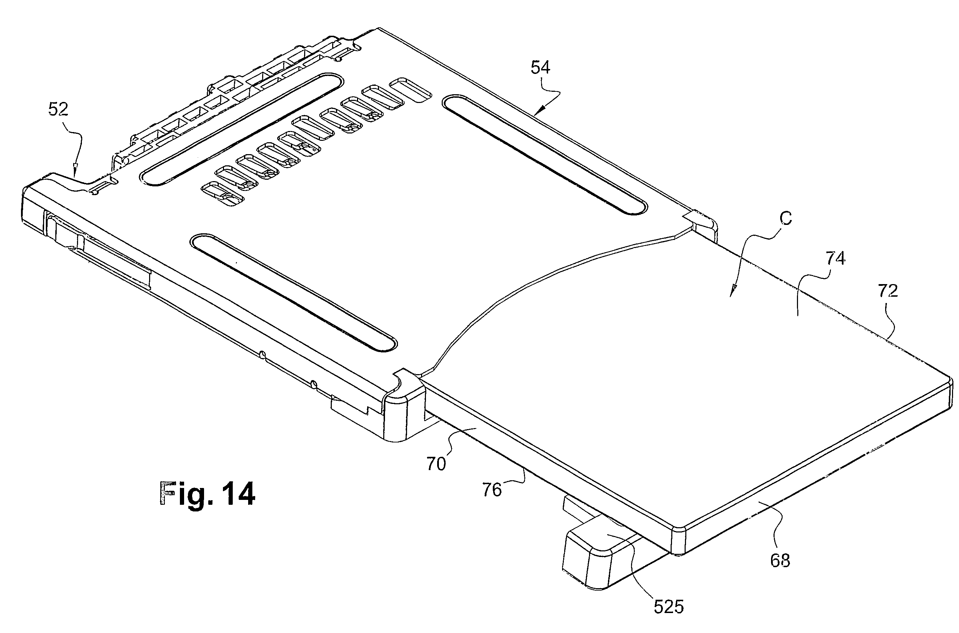

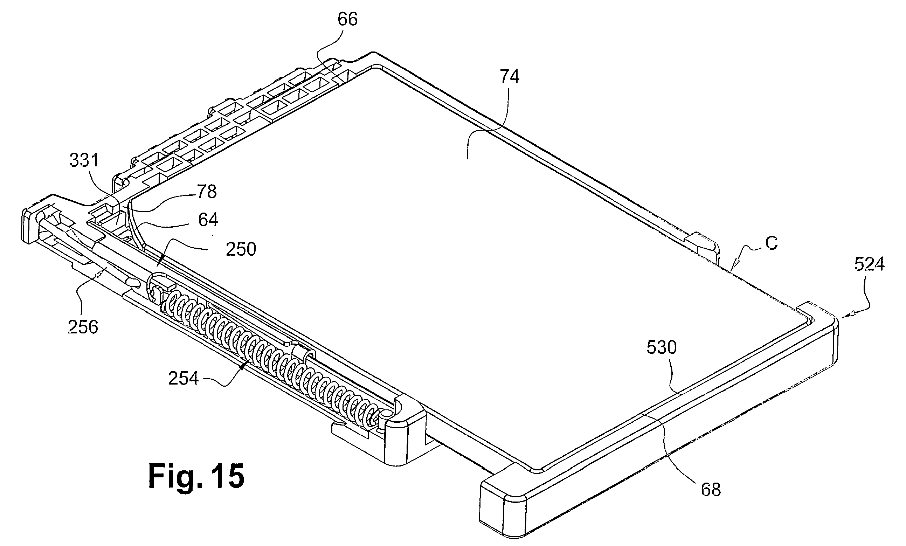

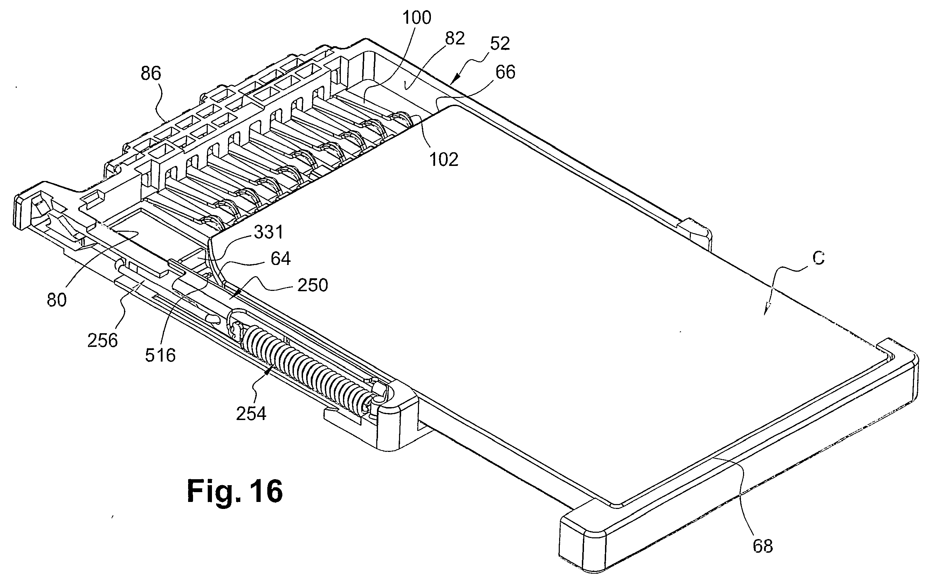

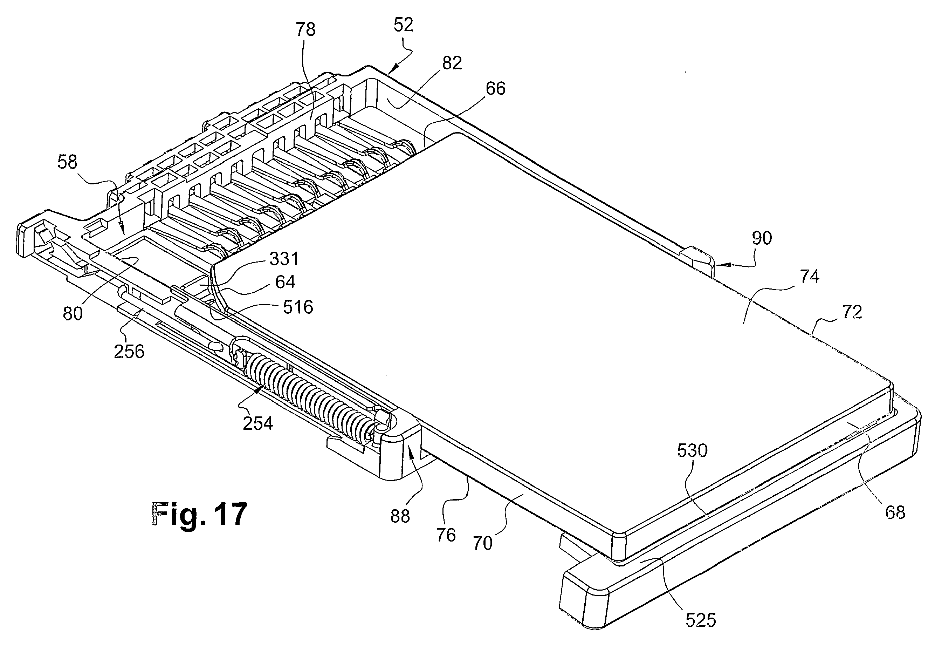

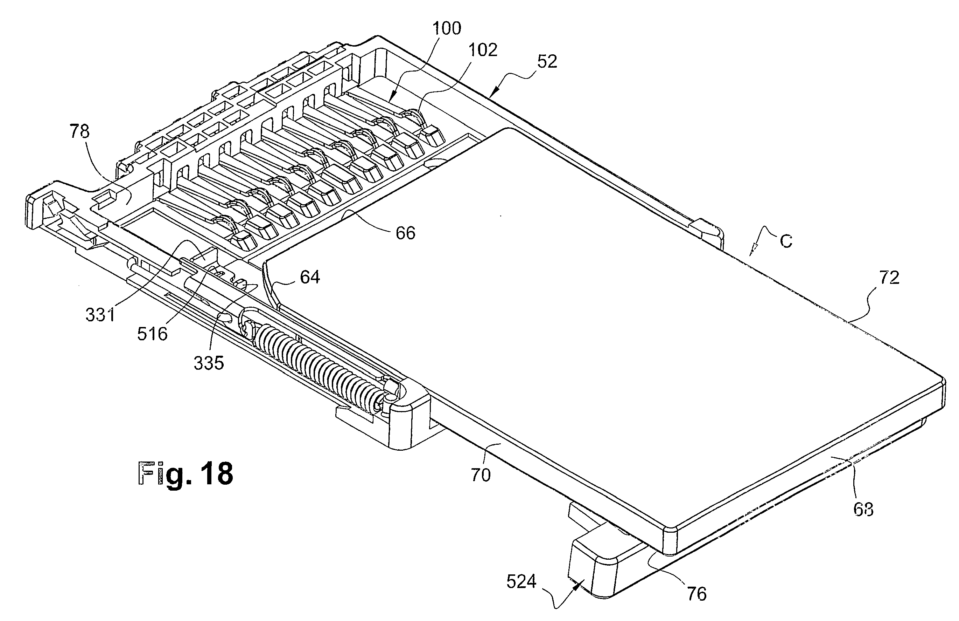

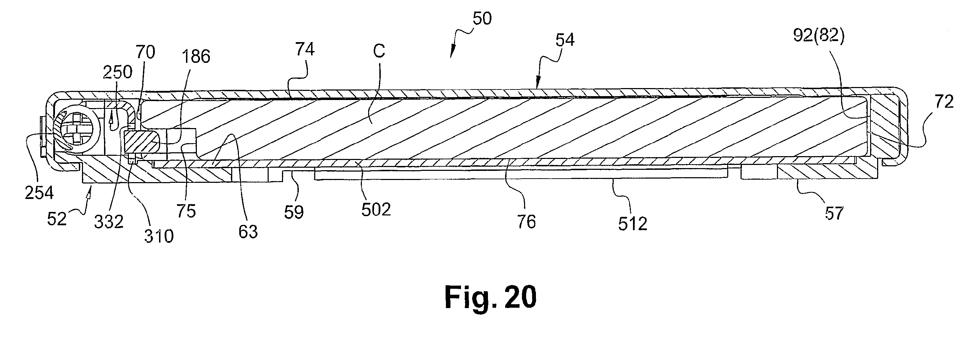

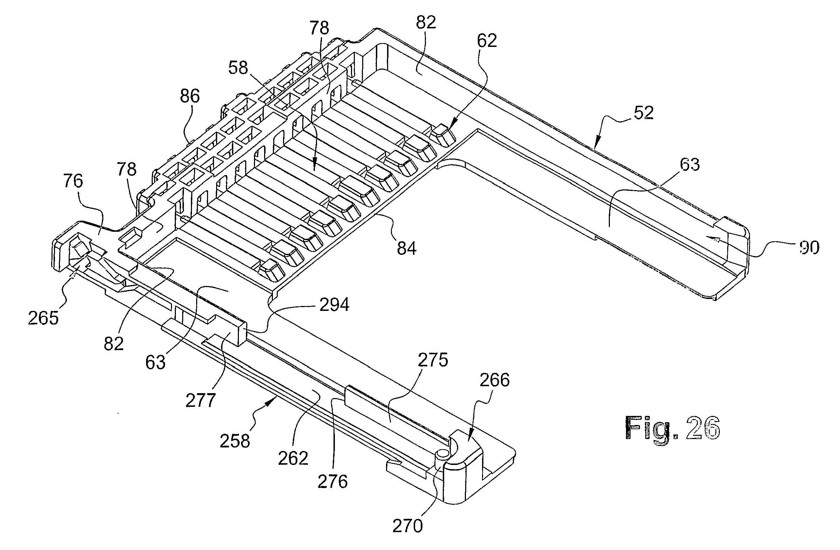

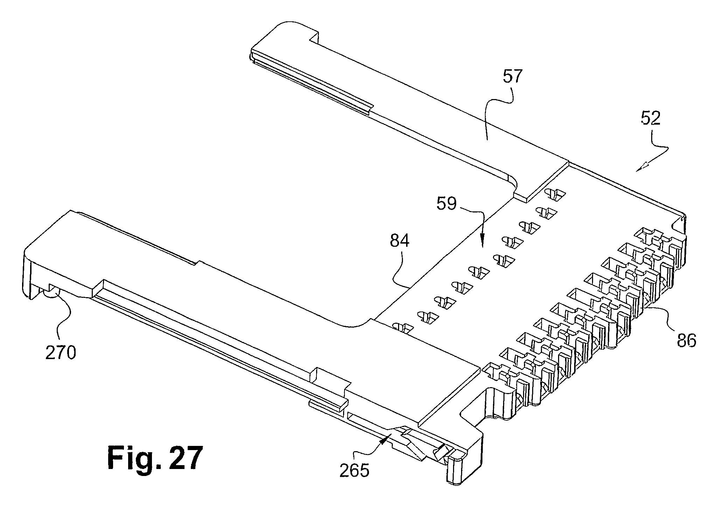

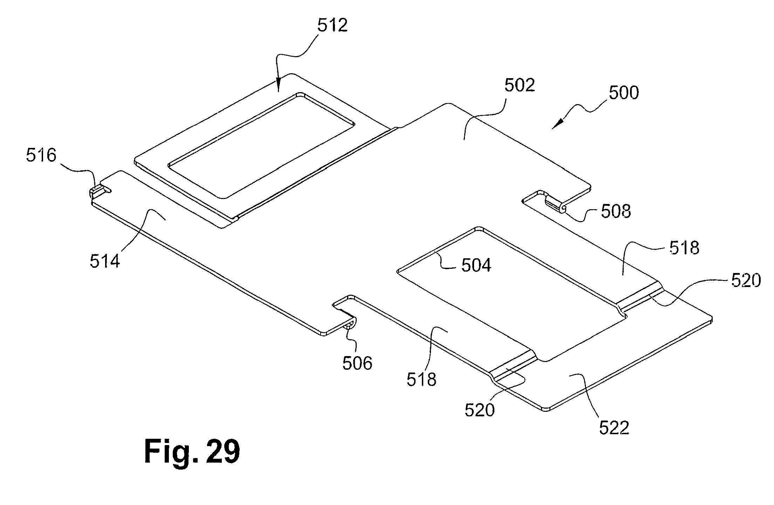

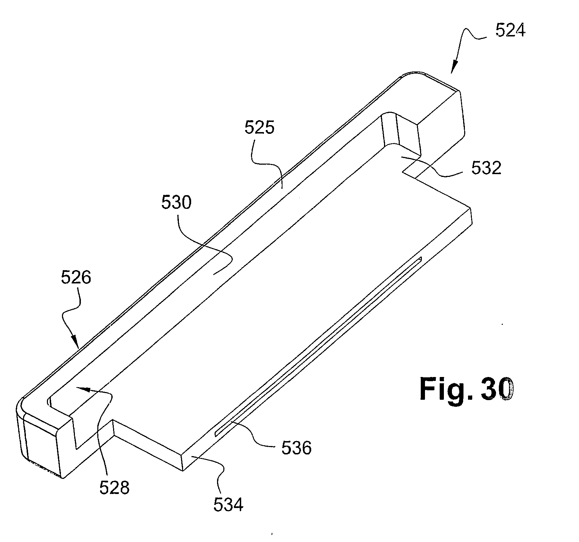

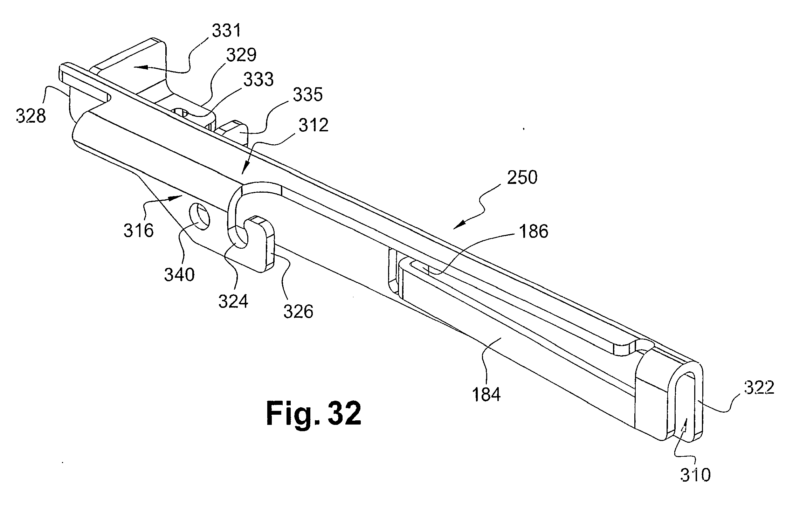

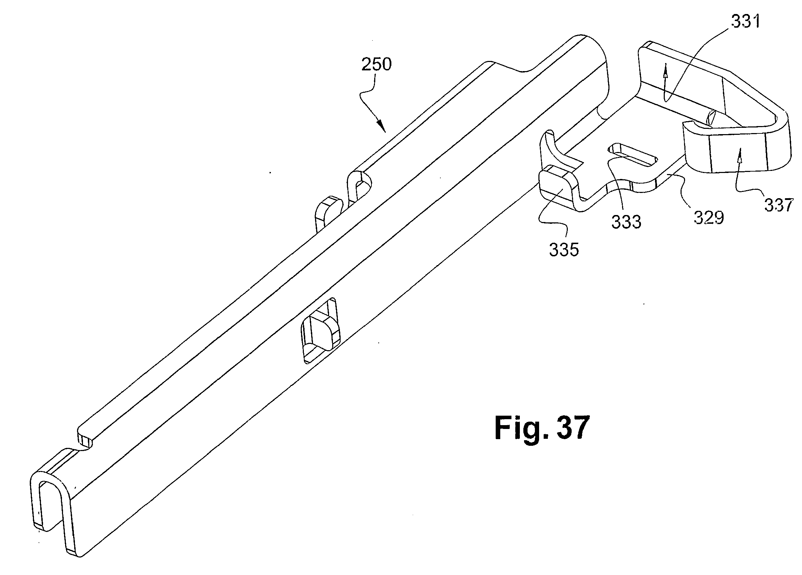

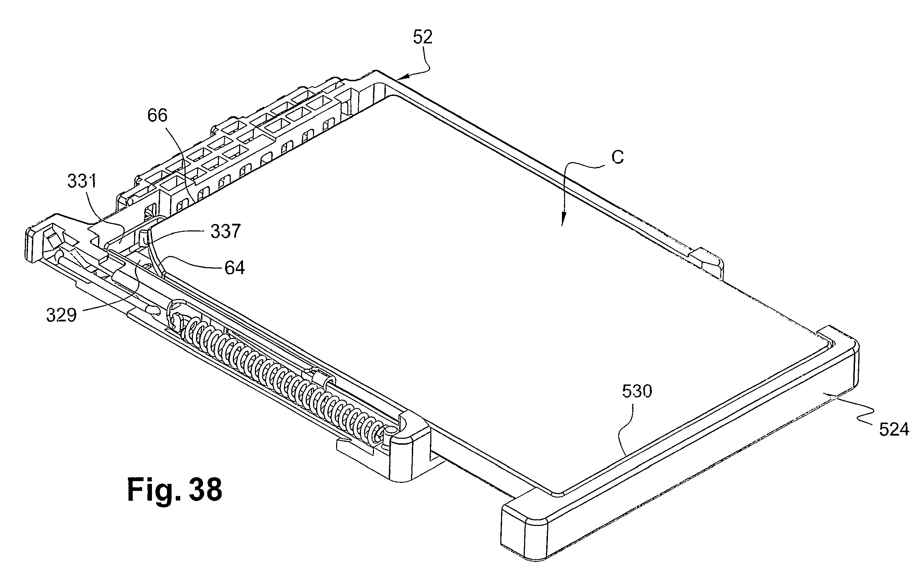

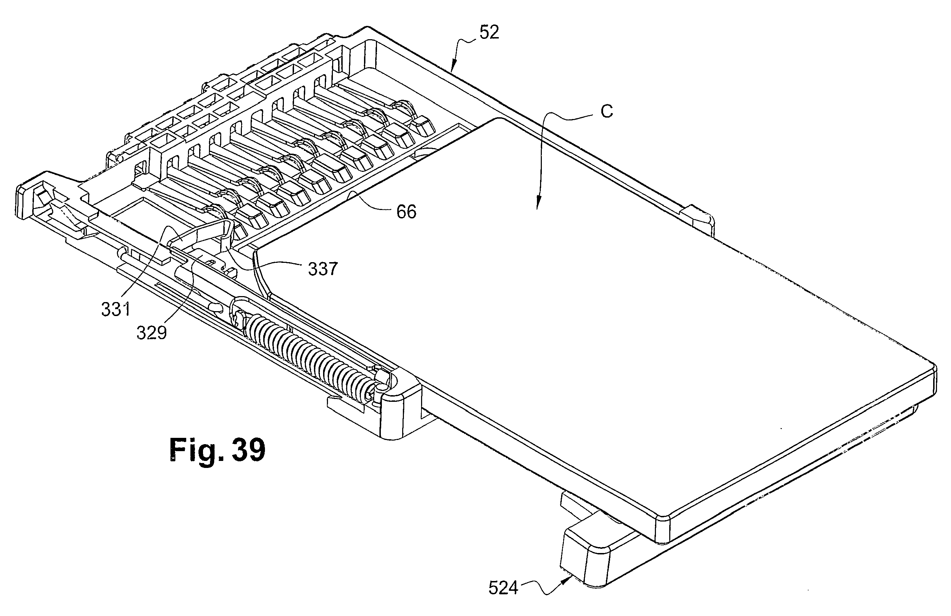

A first embodiment of the invention shown in Figures 2 to 39 will now be described in the case of a connector designed to receive the "Memory Stick Duo" memory card sold by Sony.

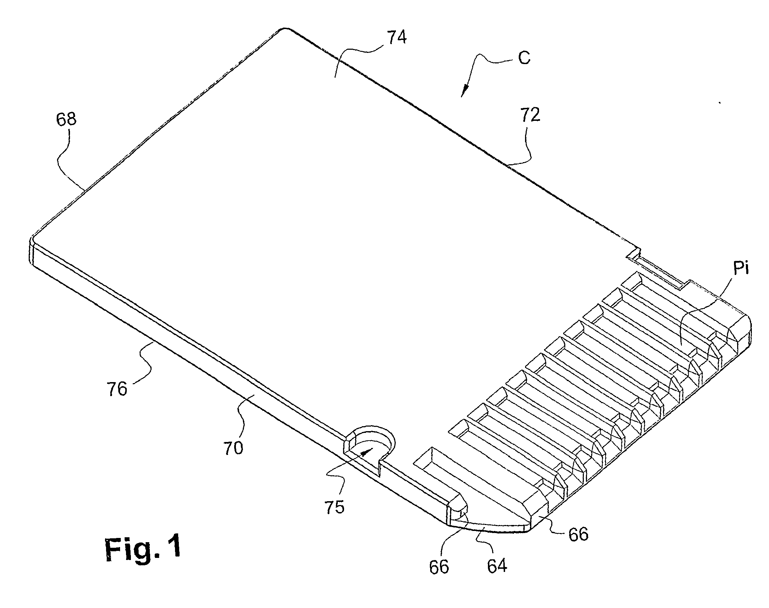

This card, illustrated in Figure 1, has in particular an immobilizing notch 75 in its left lateral edge 70.

The figures show an electrical connector whose general design is similar to that of the connector described and illustrated in document WO-A-02/089040, especially as regards the design of the "push on/push off" ejection slide with its means for retaining the card via its notch.

Thus, the electrical connector 50 essentially consists of an insulator support 52 made of plastic in the general form of a plate, which is bounded by a plane horizontal upper face 56 in which a card housing 58 is formed, the said housing being open vertically upwards.

The housing 58 is bounded vertically downwards by a horizontal lower bottom wall 62 and is open longitudinally rearwards in order to define, downwardly and laterally, a slot for the longitudinal insertion of the front portion of an electronic memory card, which is for example a card C of the Memory Stick Duo type.

The card C of known design, shown in the figures, is of rectangular general shape bounded longitudinally by a transverse front end edge 66, by a transverse rear end edge 68 and by two opposed parallel lateral edges namely the left lateral edge 70 and the right lateral edge 72.

The left front corner corresponding to the intersection of the edges 66 and 70 has a rounded corner face 64.

The card C also has a horizontal upper face 74 and a parallel opposed lower face 76 that is oriented towards the upper free contact ends 102 of the contact blades 100 of the connector, and in this case downwards towards the printed-circuit board (not shown).

The card C has, near its transverse front end edge 66, a series of conducting contact pads Pi that are oriented downwards towards the printed-circuit board that carries the connector on its upper face.

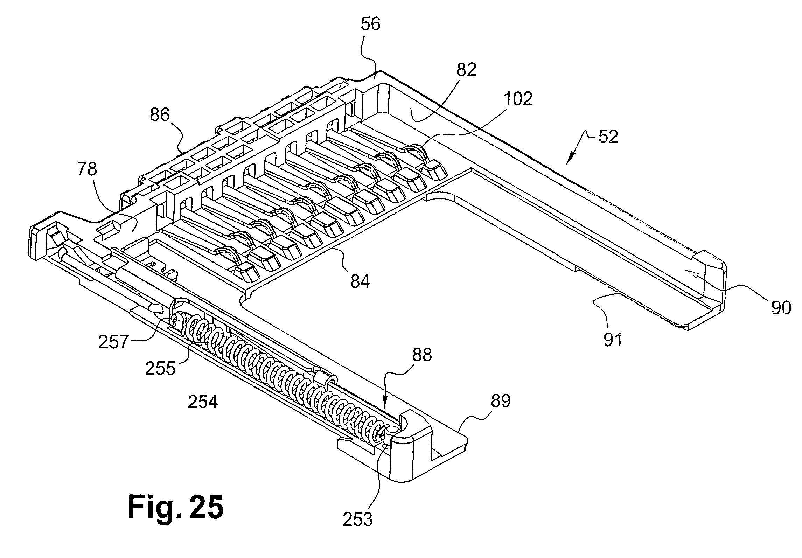

The card C, having a blocking notch 75 in its lateral edge 72, is thus capable of being inserted, in the longitudinal direction L1 indicated in Figure 25, from the rear forwards, into the housing 58 as far as the point when its front transverse edge 66 butts, directly or indirectly, against a front transverse end wall edge 78 that defines the housing 58 at the front.

The opposed lateral edges 70 and 72 of the card C are guided slidingly in the housing 58 by opposed parallel longitudinal edges 80 and 82 respectively, which define the housing 58 transversely.

As may be seen in the figures, the actual housing 58, in which the front portion of the card C is housed, is bounded transversely at the front by the end wall edge 78 and transversely at the rear by a transverse rear end face 84 of the insulator support 52.

To improve the sliding lateral guiding of the card C during its insertion into the housing 58 or its extraction therefrom, the body of the insulator support 52 has two long opposed longitudinal extensions or arms 88 and 90 that extend longitudinally rearwards beyond the rear transverse face 84 in order to increase the length of the longitudinal guiding edges 80 and 82.

According to a technique known in the field of connectors for connecting smart cards, the insulator support 52 carries a series of contact elements 100, here ten in number, which are produced in the form of elastically deformable blades, a free contact end 102 of which projects vertically above the plane of the bottom face 62 in order to cooperate with the conducting pads Pi that can be seen on the lower face 76 of the card C.

Each contact blade 100 has a tab-shaped rear free connection end 104, this being designed here in the form of a tab to be soldered onto the surface of the upper face of the printed-circuit board.

The output ends 104 of the blades 102 extend here longitudinally forwards beyond the front transverse face 86 of the insulator support 52.

In the embodiment illustrated in the figures, the connector 50 comprises, in addition to the insulator support 52, a metal or metallized lid (or cover) 54 that in particular lies above the upper face 56 of the insulator support 52 with its upper plate-shaped main part 60 that closes the housing 58 at the top.

The connector 50 illustrated in the figures includes a device 250 for ejecting the card from the connector 50.

In a known design, the ejection device 250 essentially consists of a sliding carriage or slide 250, an ejection spring 254, a U-shaped locking hook 256 and a complementary part 258 of the insulator support 52.

More precisely, the part 258 of the insulator support is a longitudinal portion provided, here on the left, beyond the edge 80.

The lateral part 258 is open laterally on the right, that is to say towards the outside of the insulator support 52, and is bounded overall by a horizontal end wall 262.

The part 258 is thus overall in the form of a housing that is bounded at its front longitudinal end by the left front corner of the insulator support 52 and by the right rear corner 266 bounded by the rear transverse face of the longitudinal arm with a card insertion chamfer.

The rear corner or block 266 has a vertical cylindrical pin 270 for fastening the hook-shaped rear longitudinal end 253 of the spring 254, which is a tension coil spring, the cylindrical body 255 of which is housed in the part 258, which has two vertical ribs 275 and 277 for guiding the slide 250 as it slides longitudinally.

Between the transverse front end face 276 of the rear rib 275 and the transverse rear end face 294 of the front rib 277, the part 258 is open transversely to the inside, towards the housing 58 and therefore towards the left lateral edge of the card when the latter is in the connector.

The slide 250 is produced here in the form of a piece made from cut and folded sheet metal.

Overall, it is in the form of a U-shaped member of longitudinal general orientation which, in the mounted position, straddles the rear rib 275 and front rib 277 that guide it so as to slide longitudinally in both directions relative to the insulator support 52.

The slide 250 is bounded longitudinally rearwards by the transverse rear end edge 322.

It is elastically returned by the tension spring 254, the hook-shaped front longitudinal end 257 of which is received for this purpose in a notch 324 formed near the rear transverse edge 326 of the front outer lateral flange 316 of the slide 250.

The inner lateral flange 310 extends substantially over the entire length of the slide 250 and is bounded longitudinally to the front by a front end edge 328.

Near its front longitudinal end, the slide 250 has a drive branch 331 which extends, in a transverse vertical plane, towards the inside relative to the plane of the flange 310 so as to be received inside the housing 58.

The thickness of the sheet metal from which the slide 250 is produced is such that its back 312, which straddles the upper edges of the ribs 275 and 277, is located vertically slightly set back relative to the horizontal upper face 56 of the insulator support, the slide 250 thus being able to slide longitudinally relative to the insulator support 52 beneath the upper horizontal plate 60 of the cover 54, which extends horizontally above the back 312 of the slide 250.

The card ejection slide 250 here is also a slide having means allowing it, in a known design, to provide a longitudinal card blocking function.

This function is unnecessary within the context of implementing the principles of the present invention insofar as the slide is attached to a rear gate which provides a card retention function and therefore prevents the card from moving longitudinally relative to the slide.

However, the slide may nevertheless be of the type with card blocking, especially so as to standardize as many components as possible within a range of connectors and also insofar as the card blocking means 186 incorporated into the slide are perfectly compatible with implementation of the invention.

For this purpose, the inner lateral flange 310 also has a rectangular window 332 placed at approximately half way along its length, which is designed to allow passage of a spur 186 for blocking a card C and which can in fact be received in the blocking notch 75 of the left longitudinal edge of the said card.

The spur 186 is formed at the front longitudinal end of a resilient blocking blade 184 that is made as one piece, by cutting and folding, with the slide 250.

Finally, the front outer lateral flange 316 has a hole 340 intended to house the rear end strand 342 of the U-shaped locking member 256.

The U-shaped member 256 is a bent wire element having a main portion 344 of longitudinal orientation and two perpendicular strands, a rear strand 342 and a front strand 346, which, in the mounted position of the U-shaped member, extend transversely towards the inside so that the strand 342 is housed in the hole 340 in the slide 250 and so that the front strand 346, of greater length, is housed in the heart-shaped locking cam 265.

The drive branch 331 is connected to the flange 310 by a lower horizontal tab 328 which lies in the plane of the lower edge 318 and in which tab a vertical through-hole 333 is formed for attaching the card slider 500 to the ejection slide 250.

The branch 331 is also a stop tab for the slide which, in the pushed-in position, butts against the facing portion of the vertical end wall 78.

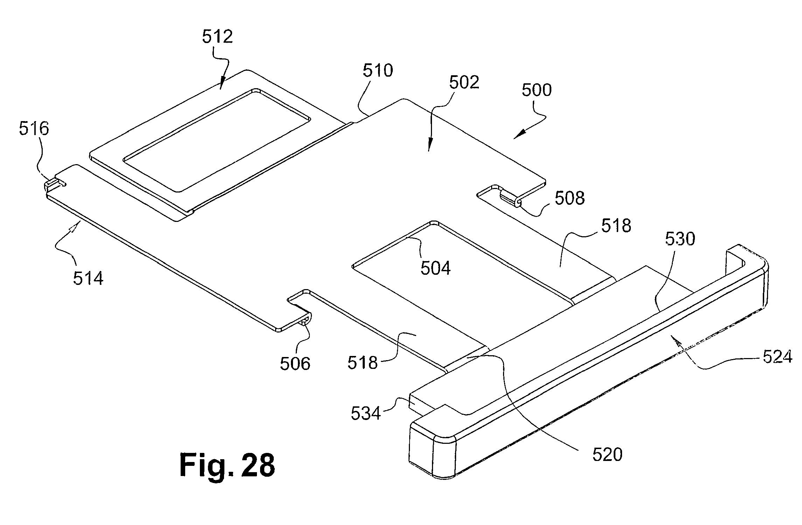

The card "slider" 500 illustrated in detail in Figures 28 et seq. is a piece with the general shape of a thin horizontal plate interposed vertically between the end wall 62 and the lower face 76 of the card, which here is a piece of cut and folded sheet metal.

It comprises a central body 502 in the form of a plate which bears, near its rear edge 504, two slideways 506 and 508 which take two complementary rails 89 and 91 so as to slide therein, the said rails being formed in the lower and transversely inner longitudinal edges of the arms 88 and 90.

Beyond its front transverse edge 510, the central plate 502 is extended forwards by a cavitied front guiding and stabilizing plate 512 which is always at least partly housed in a recess 59 formed for this purpose in the horizontal lower face 57 of the insulator support 52, which thus ensures sliding in the vertical plane with no play.

The central plate 512 is also extended by a front coupling arm 514, the front free end of which has a coupling finger 516 that extends vertically upwards and is permanently housed in the coupling hole 333 of the slide 250.

The arm 514 is in the same plane as the central plate 502 and extends horizontally above the facing portion of the end wall 62 that has a recess 63.

The recess 63 formed from the two sides also makes it possible to house the lateral edges of the central plate 502 which is thus "lodged" in the thickness of the insulator body with its upper face coplanar with the end wall 62.

The slide 250 and the slider 500 thus constitute an integral movable assembly, which moves longitudinally forwards or rearwards.

Put another way, the assembly 250-500 may be considered as a card-holder carriage.

Beyond its rear edge 504, the central plate 502 is extended rearwards by a pair of rear longitudinal arms 518 which are normally coplanar with the central plate 502.

The arms 518 constitute two flexing beams that can deform elastically relative to the initial rest plane so that their rear free ends 520, which are connected by a rear transverse arm or bar 522, can be displaced overall downwards.

The rear arm 522 constitutes a tab for mounting and fastening the rear gate 524 having the retention bar 526.

The gate 524 is a plastic moulded part consisting essentially of a rear transverse bar 526 for retaining the card C.

The bar 526 has an internal housing 528 complementary to the shape of the rear end portion of the card C, which housing has especially a front vertical transverse face 530, which faces the rear edge 68 of the card, and a horizontal bottom 532.

The gate 524 also has a front lower extension 534 that includes a horizontal slot 536 emerging towards the front, in which the rear transverse arm 522 is housed and fixed.

The entire gate 524 is bounded downwards by a lower horizontal face 538.

The horizontal upper face 532 common to the housing 528 and to the extension 534 is coplanar with the upper face of the arms 518 and of the central plate 502.

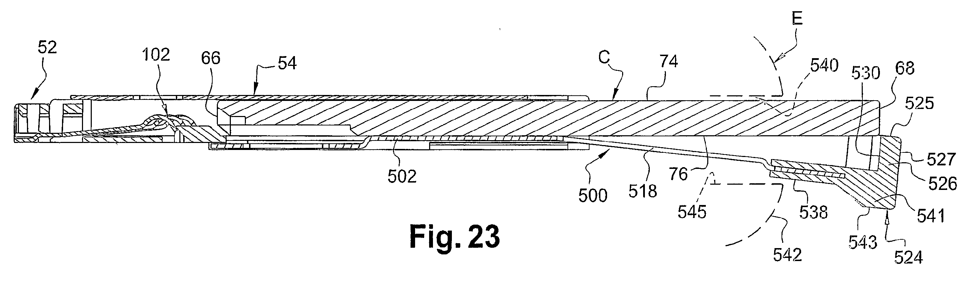

When the card is placed in the slider 500 in the ejected rear position, as shown in Figure 23, its rear edge 68 is opposite the front transverse face 530 of the retention bar 526.

Its front transverse edge 66, with the corner face 64, faces the drive branch 331, together with a complementary polarizing tab 335 that faces a set-back portion 66' of the edge 66.

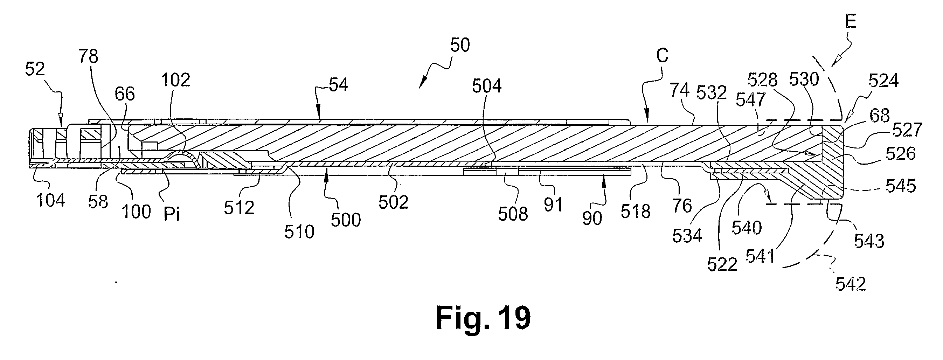

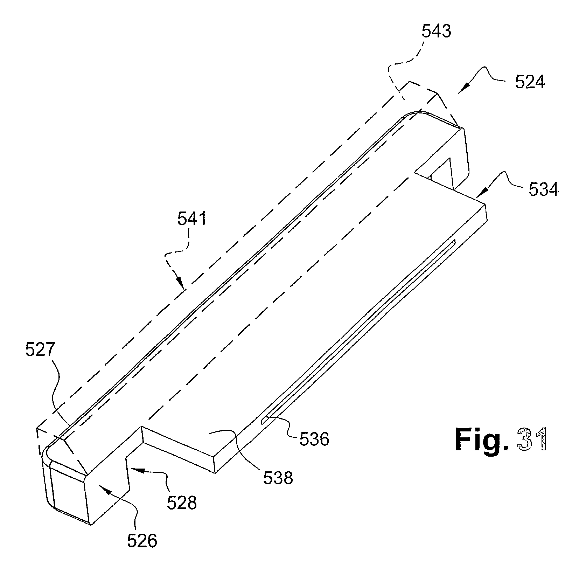

Figures 19 to 24, which illustrate the operation in association with an item of electronic equipment E fitted with the complete connector 50, show an alternative embodiment of the lower part of the door 524, which has a thickened lower heel 541 bounded by a lower face 543 offset downwards relative to the inner face 538. The heel 541 is also shown in dotted lines in Figure 31.

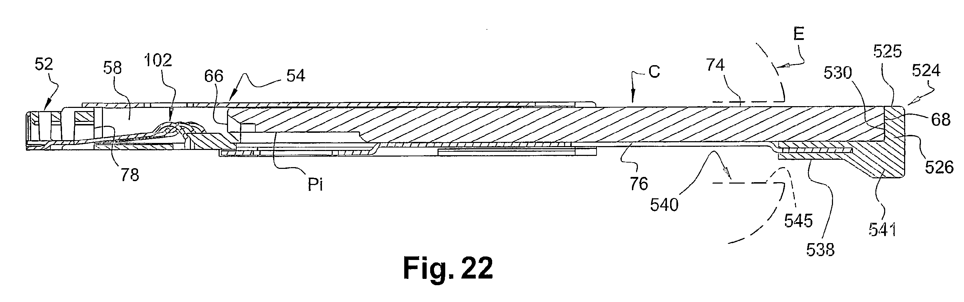

If the user pushes the bar 526 forwards, by acting on its external rear transverse face 527, it brings the slider 500 and the slide 250 that is coupled to it into the maximum pushed-in position shown in Figure 22, he then stops pushing, and the slide 250, and therefore the slider 500, automatically locks in the position shown in Figure 19.

In this position, especially as shown in Figure 19, the gate 524, 527 closes off, almost without any clearance, the opening or slot 540 formed in a front face 542 of the case of the equipment or appliance E that is equipped with the connector. The slot is bounded downwards by a horizontal face 545 and upwards by a horizontal face 547 so that its total height is approximately equal to the maximum height of the gate 524 corresponding to the distance that separates the faces 525 and 543.

To unlock the card, the slide 250 must again be unlocked.

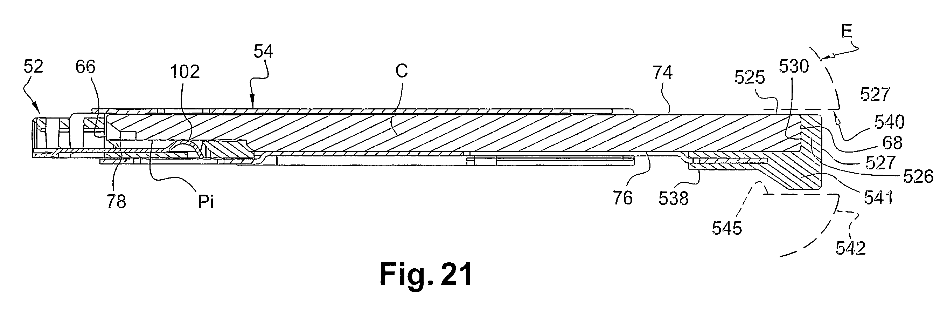

For this purpose, the user again pushes the bar 526, 527 forwards as far as the maximum pushed-in position shown in Figure 21, in which it may be seen that the rear transverse face 527 of the gate 524 is offset forwards inside the slot, and then he stops pushing.

Under the action of the spring 254, the slide moves back as far as its maximum ejected rear position shown in Figure 21, in which the gate 524 with the bar 526 is again in the high position for longitudinal retention of the card C.

The gate 524 with the slider 500 is moved back relative to the equipment E, 542 sufficiently to allow the user to lower the gate by pressing vertically downwards on the horizontal upper face 525 and elastically deforming the beam-arms 518.

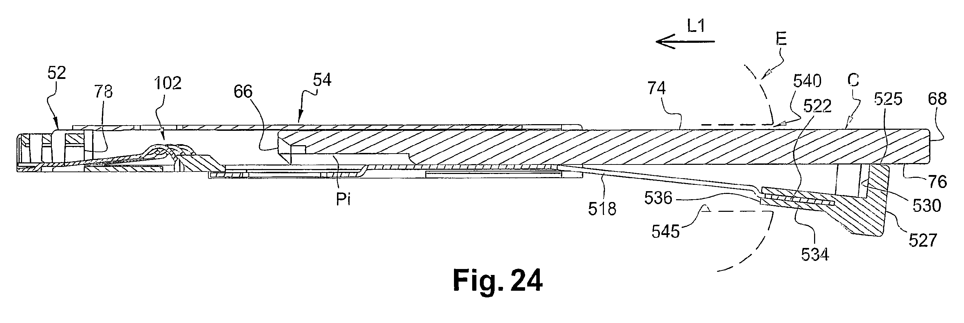

The retention bar 526 of the gate 524 is then moved away downwards, as illustrated in Figure 24, and it is then possible to extract the card C longitudinally rearwards, out of the slider 500.

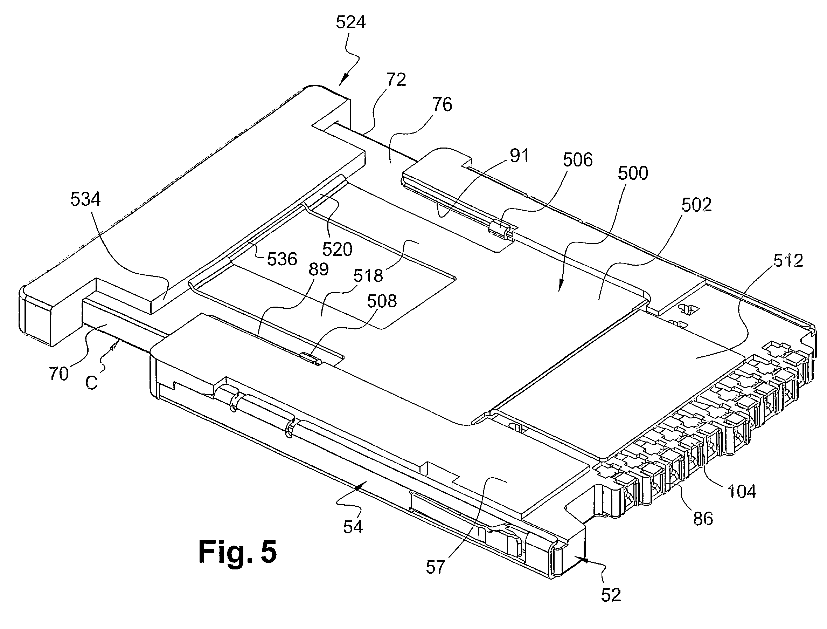

This extraction is illustrated in Figure 5, which shows that the card slides via its lower face over the upper face 525 of the bar 526.

As may especially be seen in Figure 23, a portion of the lower face 538 of the gate 524 is opposite a facing portion of the lower face 545 of the slot 540 so as to constitute a safety device, which prevents the user from bearing excessively on the gate and plastically deforming the arms 518.

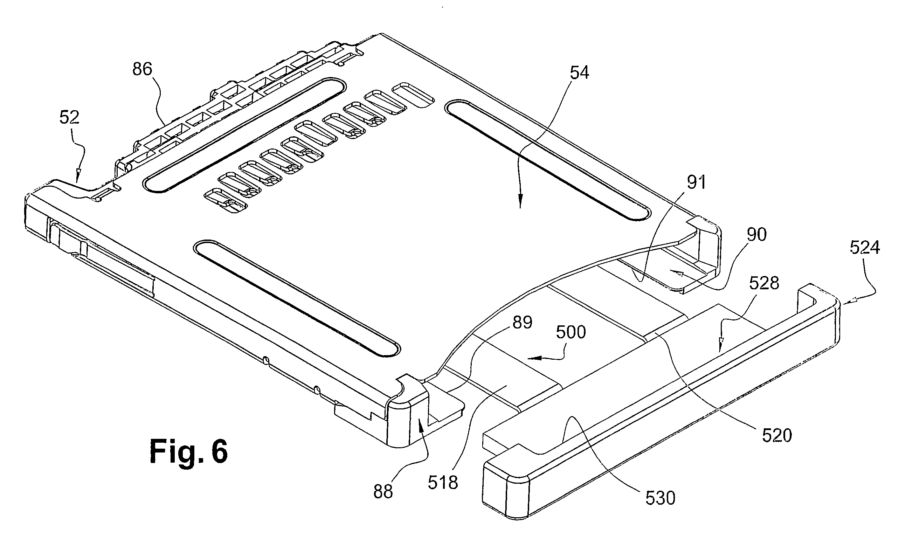

Once the card has been removed, the bar 526 is elastically returned to its high rest position illustrated in Figures 2 and 6.

Without the card C, it is possible to "reclose" the slider 500 with its gate, locking it using what is called the "push on/push off" function.

This is because, by acting on the gate 524 and the slider 500, the slide 250 is acted upon, even in the absence of a card.

To insert a card, with the slide 250 and the slider 500 in the ejected rear position, the user introduces the card into the slider, in the generally horizontal forward direction, by deforming the arms in order to lower the gate and make the card slide into the carriage until it again reaches the position illustrated in Figure 22.

To make it easier to extract the card C from the slider 500 starting from the position illustrated in Figure 22, and especially because the upper face of the card C has no groove for making it easier to handle it, it is possible to provide an extraction spring incorporated into the movable assembly 250-500.

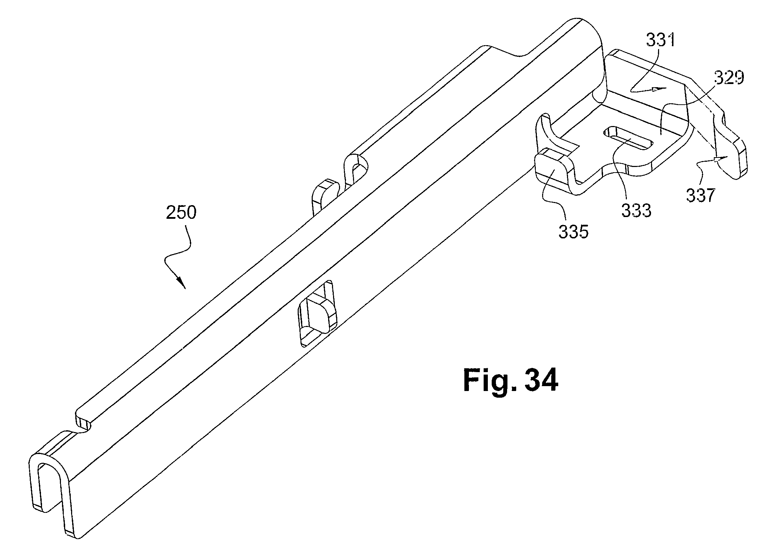

Such springs, in this case leaf springs, are illustrated in Figures 34 to 39.

For this purpose, the tab 331 of the slide 250 is extended transversely inwards and rearwards by a leaf spring 337, which cooperates with the facing portion of the front edge 66 of the card.

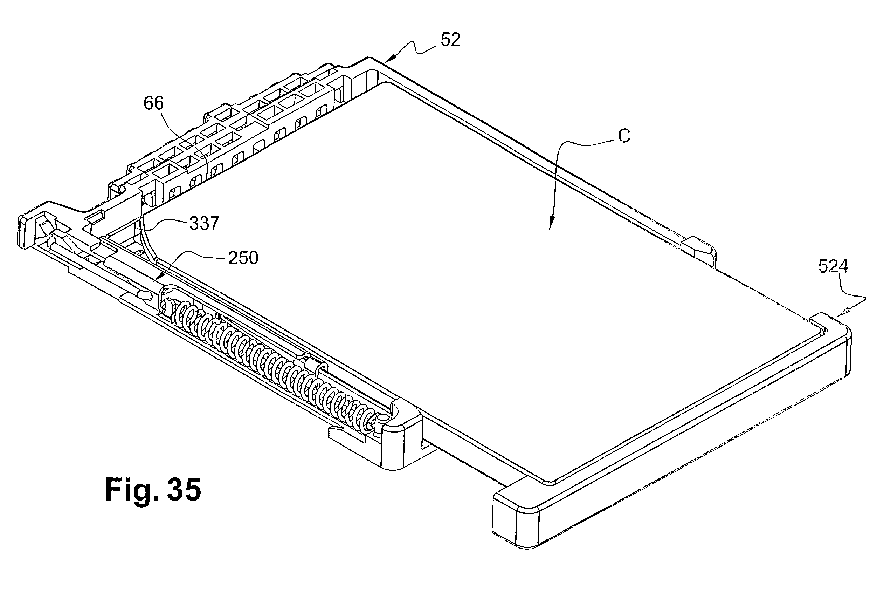

In Figure 34, the leaf spring 337 is a single curved leaf spring, which is an elastic beam that bends and is tensioned when the card C is in position in the slider 500, as may be seen in Figure 35.

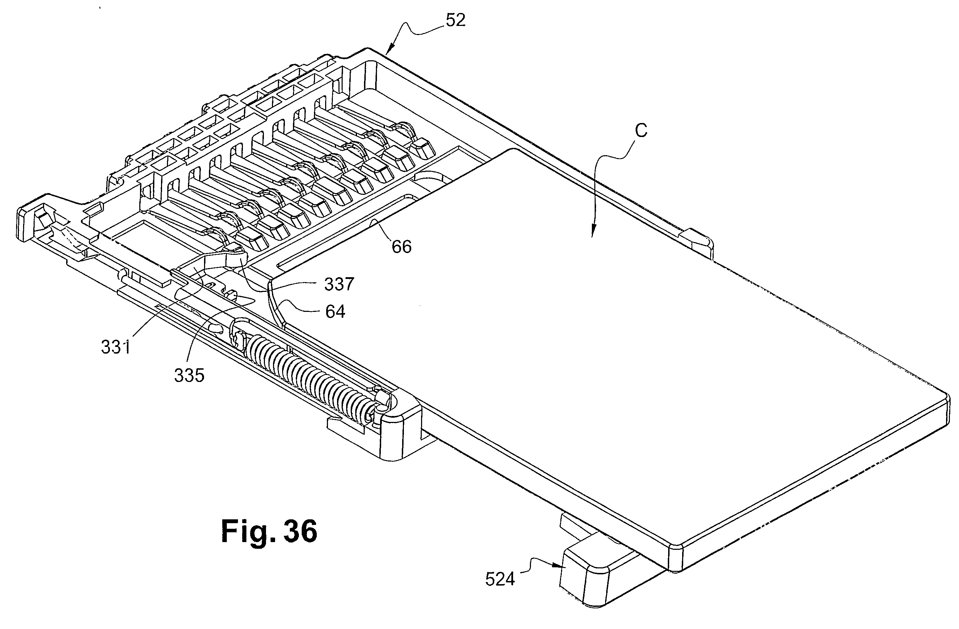

As soon as the gate 524 forming the retention bar has been lowered sufficiently by the user, the tensioned leaf spring 337 causes the card C to be automatically ejected rearwards out of the slider (Figure 36).

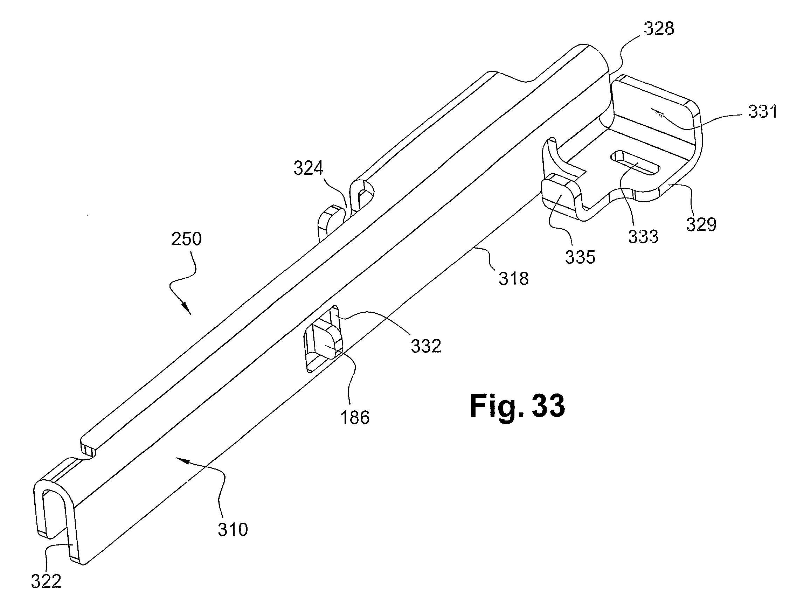

In Figures 33 to 39, the leaf spring is bent into a hairpin shape.

The elastic preloading of the leaf spring 337 relative to the spring 254 of the slide is such that it is tensioned by the insertion of the card C, without causing an initial forward displacement of the slide.

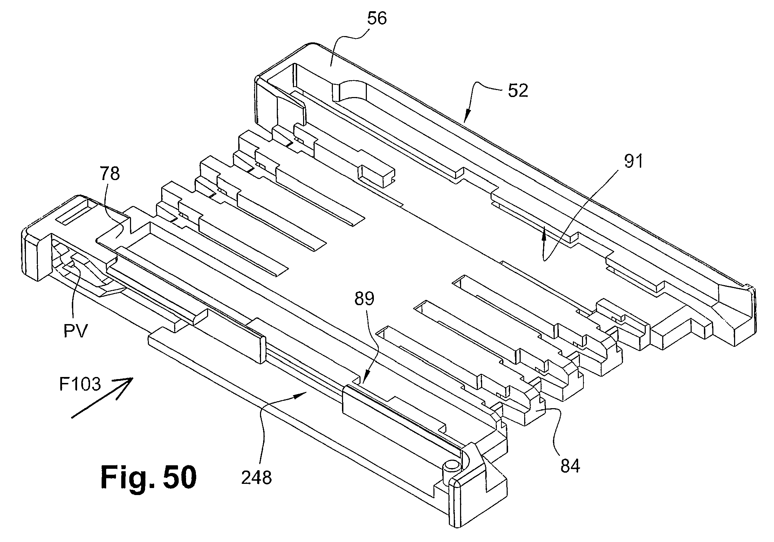

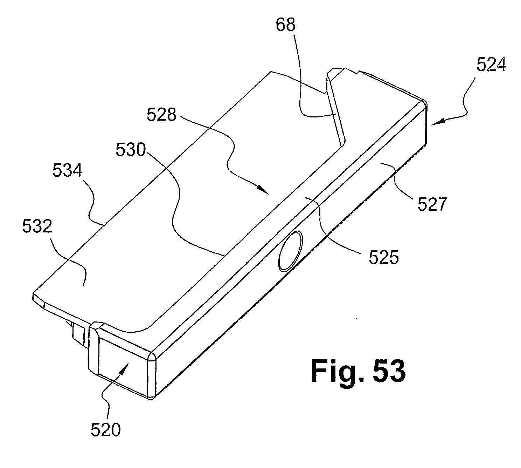

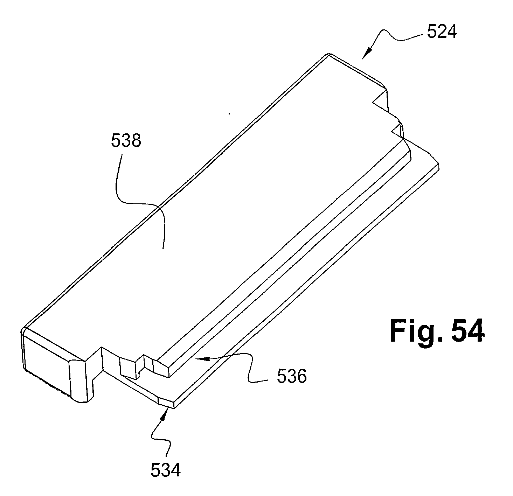

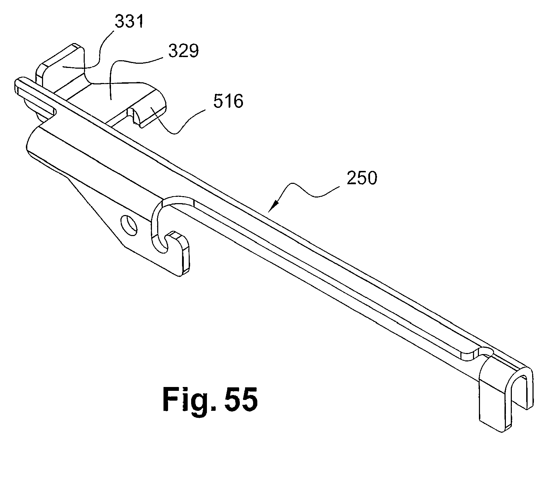

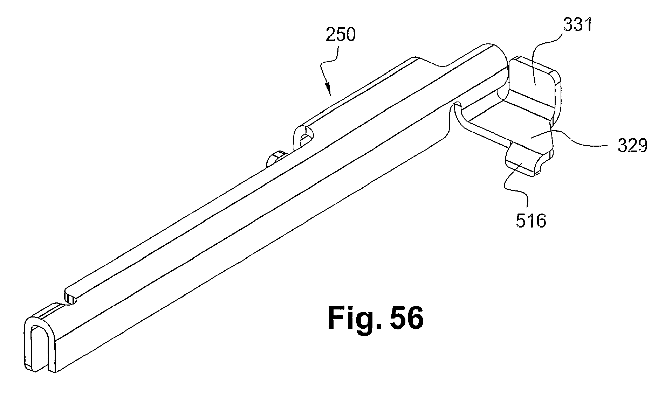

For comparison, the second embodiment of the invention illustrated in Figures 50 to 57 will now be described, which relates to a MICROSIM card and the connector 50 according to the invention intended to receive such a card.

The card C has here a 45° corner face 64 formed by the intersection of its rear transverse edge 68 and its right lateral edge 72.

The polarizing corner face 64 is designed to cooperate with a complementary shape 98 formed for this purpose in the right-hand corner of the housing 528 of the gate 524 - this shape 98 ensures that the MICROSIM card C is fitted correctly and unequivocally in the slider 500, and therefore in the connector 50.

The insulator support 52 here has contact blades 100, 102 arranged in pairs aligned longitudinally with the free contact ends 102 at the centre of the connector in order to correspond to the pads Pi on the lower face 67 of the MICROSIM card.

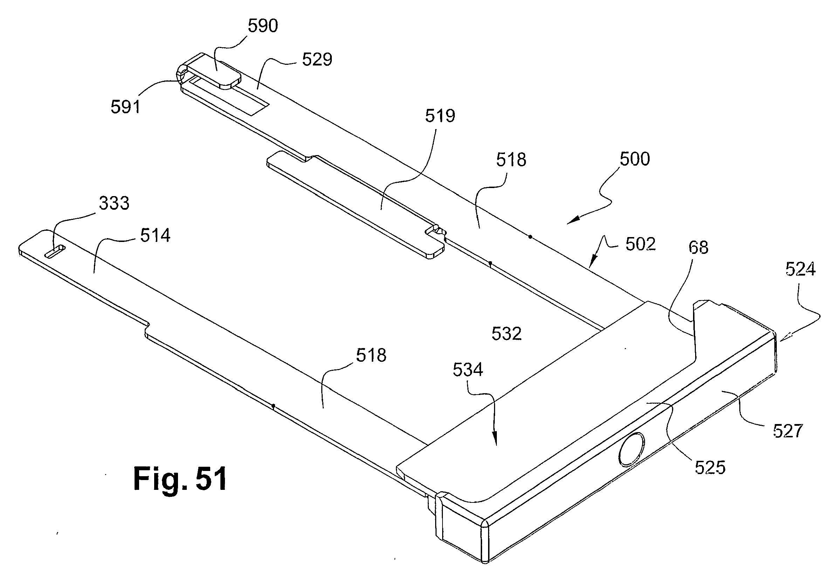

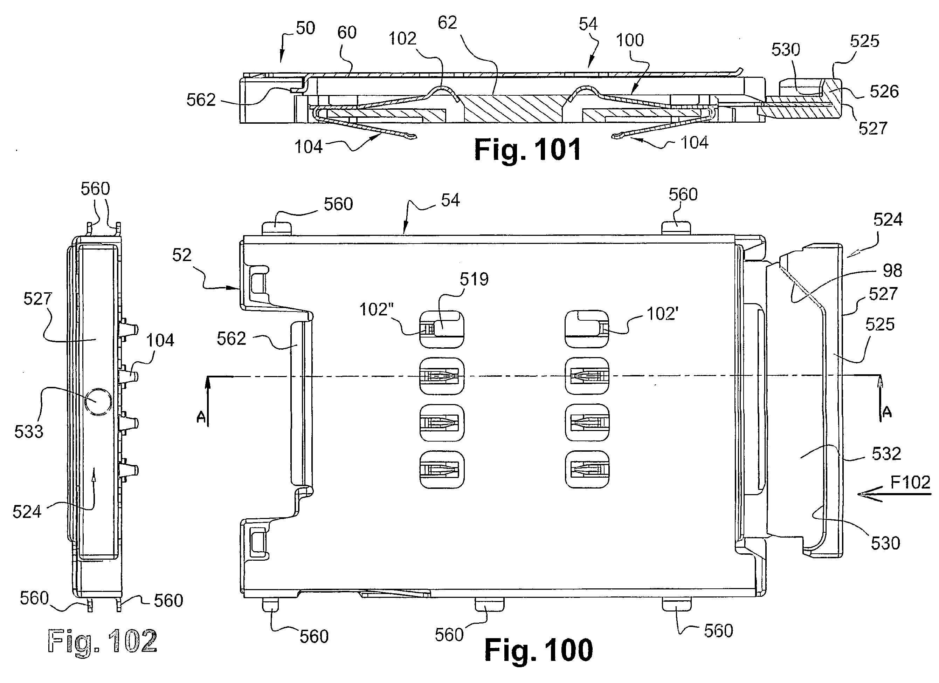

The connection ends 104 of the blades 102, not shown in Figures 51 to 58, may be of the type to be surface-soldered to the printed-circuit board, as previously, or else of the solderless type using the technique illustrated in Figures 100 to 102 in which they are bent back beneath the lower face of the connector and inclined downwards so that their free ends come into electrical contact by elastically bearing on a corresponding track of a printed-circuit board or of a flexible circuit. For this purpose, the cover 54 includes tabs 560 and 562 in three of its edges in order to allow it to catch and to be positioned, by fitting, onto the board.

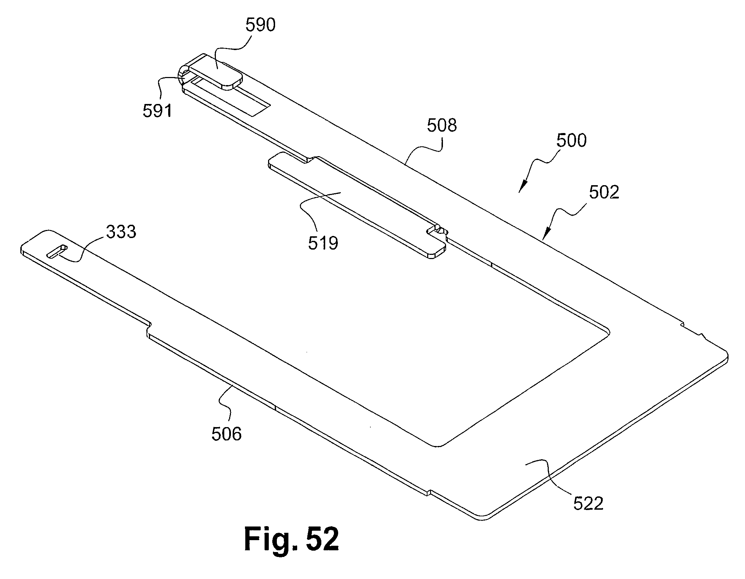

As may especially be seen in Figures 51 and 52, the slider 500 is formed essentially by the two parallel arms 518, the left-hand one of which is extended by the coupling arm 514, which in this case has the coupling hole 333, whereas the tab 329 of the slide 250 has the coupling finger 516 that is oriented vertically downwards to be received in the hole 333 of the slider 500.

The right-hand arm 518 includes a moving switch blade 519 and, at its front free end 529, a tab 590 folded over horizontally, which serves as a guide and positioning means for the card ejection spring 337, which here is a helical compression spring interposed between the end wall 591 of the tab 590 and the rear transverse edge 66 of the card.

The rear longitudinal end portion of the slider 500 with its gate 524 has an overall design similar to that described above.

In order for the body 502 of the slider 500 to be guided as it slides, the said body 502 having the general form of a plate cut out into a U, the opposed outer longitudinal edges 506 and 508 of the slider 500 are slidingly received in complementary rails formed inside the longitudinal arms 88 and 90.

The right-hand longitudinal arm 518 of the metal slider 500 has a horizontal upper plate 519, offset vertically upwards, which constitutes a member forming a moving switch blade that cooperates with two fixed, aligned and longitudinally opposed blades, a rear blade 102' and a front blade 102", that are carried by the insulator body 52 of the connector, these being aligned transversely with the moving switch blade 519.

The fixed blades of the switch are identical to the other contact blades 102, called signal contact blades, relative to which they are only offset vertically downwards, this offset resulting from the design of the insulator support 52 in the region where the blades 102' and 102" are fitted.

The slide 250 has a drive branch 331, which is a vertical rear transverse tab facing which the front transverse edge 66 of the card C lies.

The compression coil spring 337 keeps the card C inserted in the slider 500 by being pressed against the front transverse face 530 of the bar 526 of the gate 524.

According to a variant (not shown), the longitudinal end of the coil spring 337 could butt against a facing portion of the end wall 78 of the housing 58 of the insulator support 52 of the connector 50.

However, in such a configuration, the total extension of the spring is considerably increased as it is necessary to add the slider ejection travel (about 5 mm) to the travel (about 2 mm) for ejecting or extracting the card from the slider.

Such a spring is necessarily bulkier and applies an unnecessary additional force to the slider when the card has been inserted into the slider, which detracts from the tactile sensation experienced by the user when the gate is being closed, thanks to the push on/push off device.

Moreover, again in this situation, during the travel of this slider, the variation in the force applied by the spring 337 on the card would be the opposite of that desired, this force being a maximum in the pushed-in position and a minimum in the ejected position of the slider, which is the position in which the force must then exert its function of assisting the extraction or ejection of the card C from the slider 500.

The moving blade 519 of the switch allows the integrated circuits to be activated after closure of the electrical circuits established between the pads Pi on the card and the contact blades 100, 102 of the connector, and allows the assembly to be deactivated before the same electrical circuits are opened during the insertion or extraction phases corresponding to the use of the push on/push off system.

The front longitudinal end of the blade 519 comes into contact with the front contact 102" just after closure of the electrical circuits between the pads Pi and the signal contact blades 102, and it escapes from the front contact 102" just before opening of the electrical circuits Pi - 102 during ejection of the card.

The rear longitudinal end of the moving blade 519 is designed so that it escapes from the rear contact 102' just before opening of the electrical circuits during the overtravel of the push on/push off device between the position corresponding to the pushed-in position and that corresponding to the locked position, either at the end of the insertion phase or at the start of the ejection phase.

In this way, at any point in the card insertion/extraction cycle carried out by the push on/push off device, the switch always opens before electrical circuits open, and always closes after the electrical circuits have closed, thus protecting the integrated circuits of the card.

The presence of the switch is particularly important in the case of the MICROSIM card in which the conducting pads are of very short length, of around 2 mm.

In the figures, the slide 250 with its complementary means is placed on the left-hand side of the connector, as in the previous case.

However, insofar as the MICROSIM card does not have a notch in its lateral edges, and the slide does not have a locking spur, it is also possible to place the slide 250 symmetrically on the right-hand side, which then allows the dimensions of the connector to be reduced.

In the case of a MICROSIM card that contains the particulars of the telephone subscriber, it is particularly important for the user not to be able to cause the card-holder carriage to be accidentally ejected during a communication, for example by inadvertently pushing on the gate 524, 527.

For this purpose, provision is made, in the locked operating position, for the vertical rear face 527 to be flush with the face of the equipment in which the slot closed off by the gate 524 is formed, or else to be slightly longitudinally offset forwards, that is to say towards the inside of the equipment.

In addition, the heart-shaped locking cam 265 has an unsymmetrical profile such that the unlocking travel is offset forwards and means that there is an overtravel, of a few mm, forwards relative to the locking travel.

Thus, opening requires the user to push on the gate, for example with the tip of a pencil in the central housing 533.

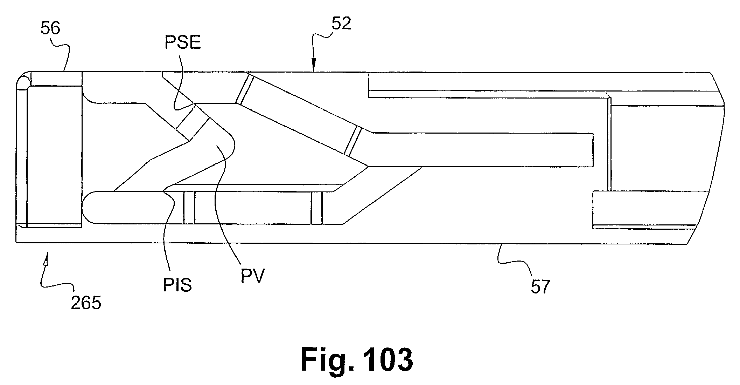

This safety means is obtained thanks to the heart-shaped cam profile 265 illustrated in Figure 103, which shows that the upper point PSE for entry into the profile in the direction of the locking point PV, for the purpose of locking, is offset rearwards relative to the lower point PIS for exiting the profile on leaving the point PV, for the purpose of unlocking.

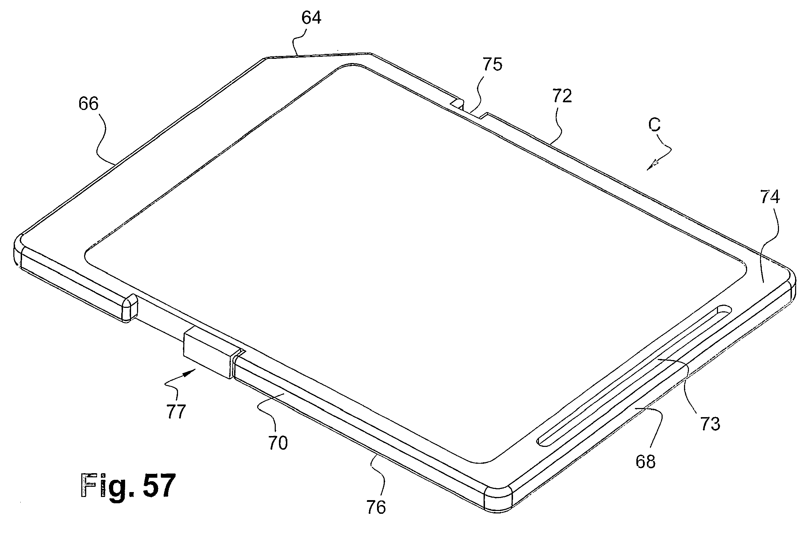

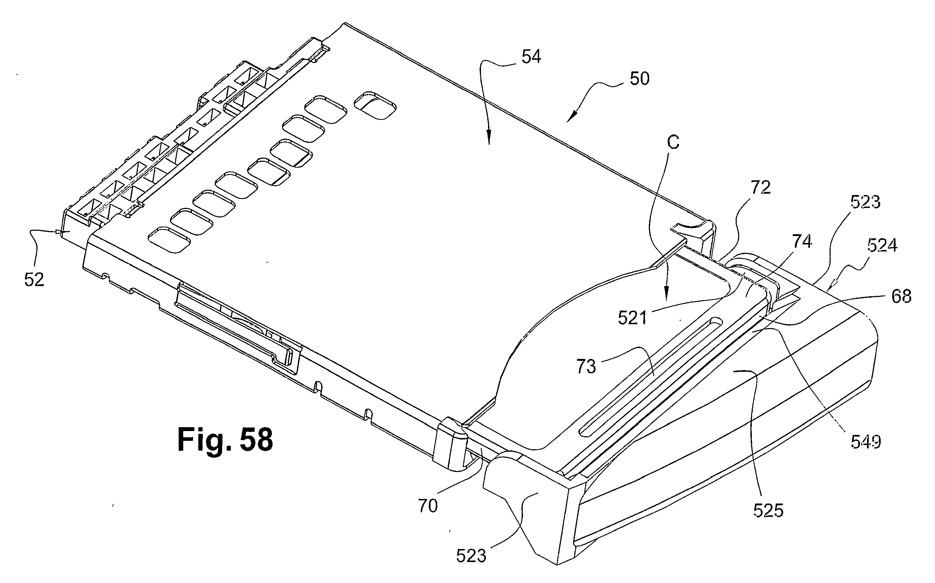

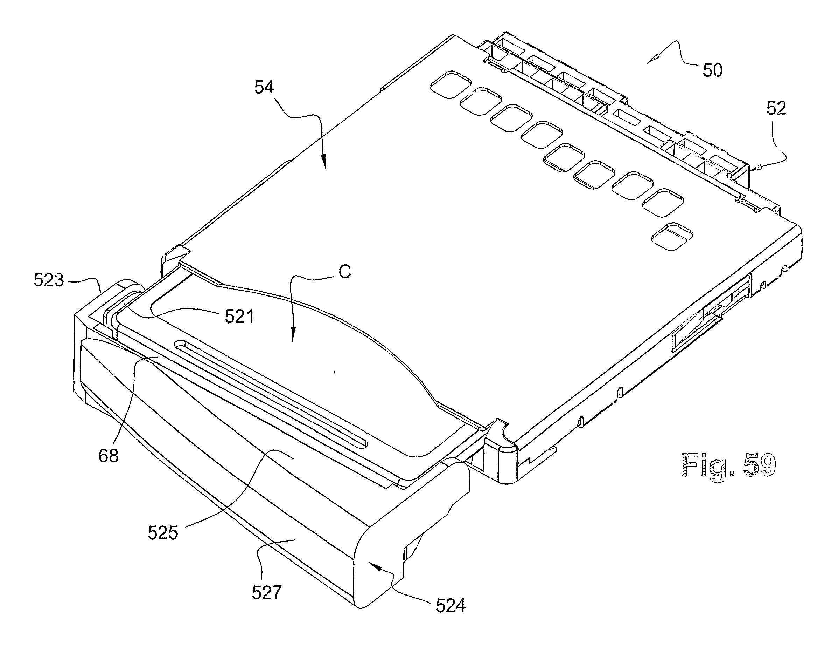

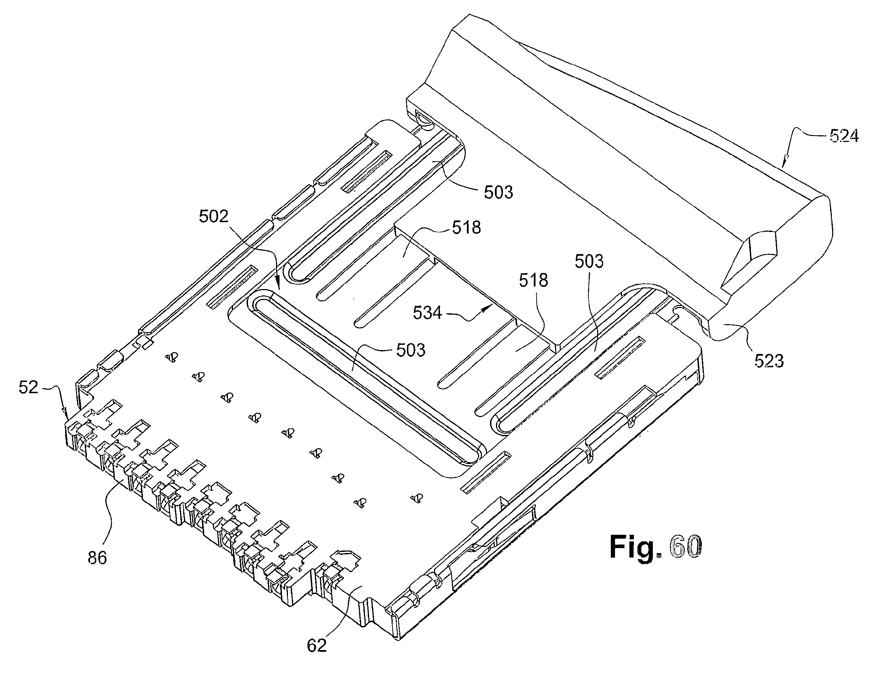

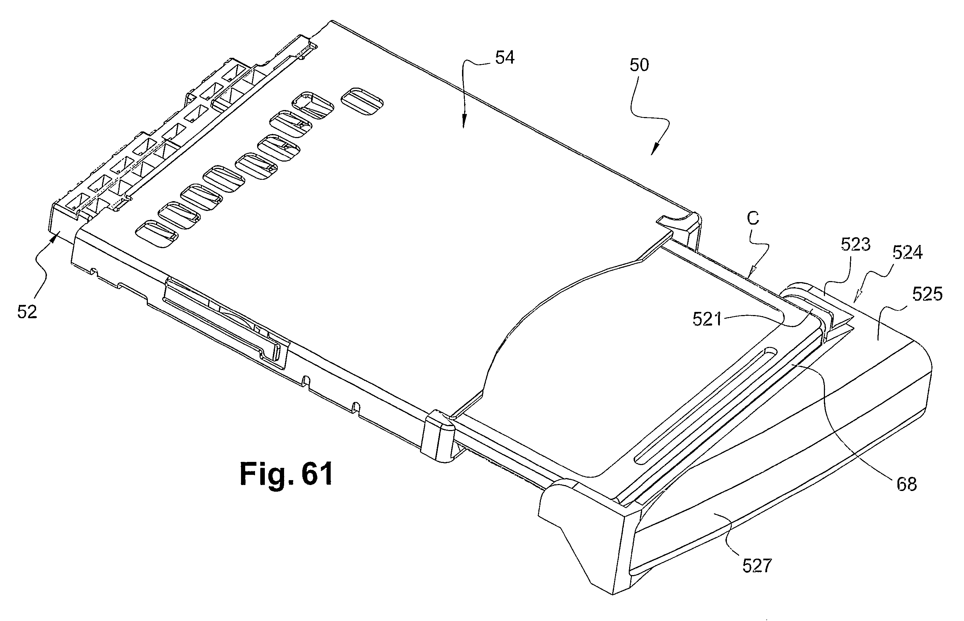

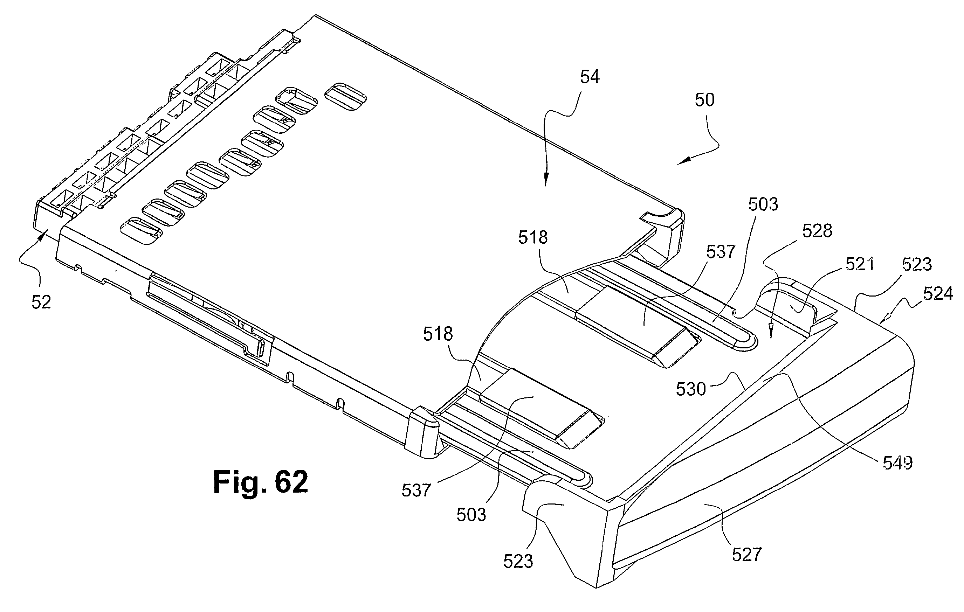

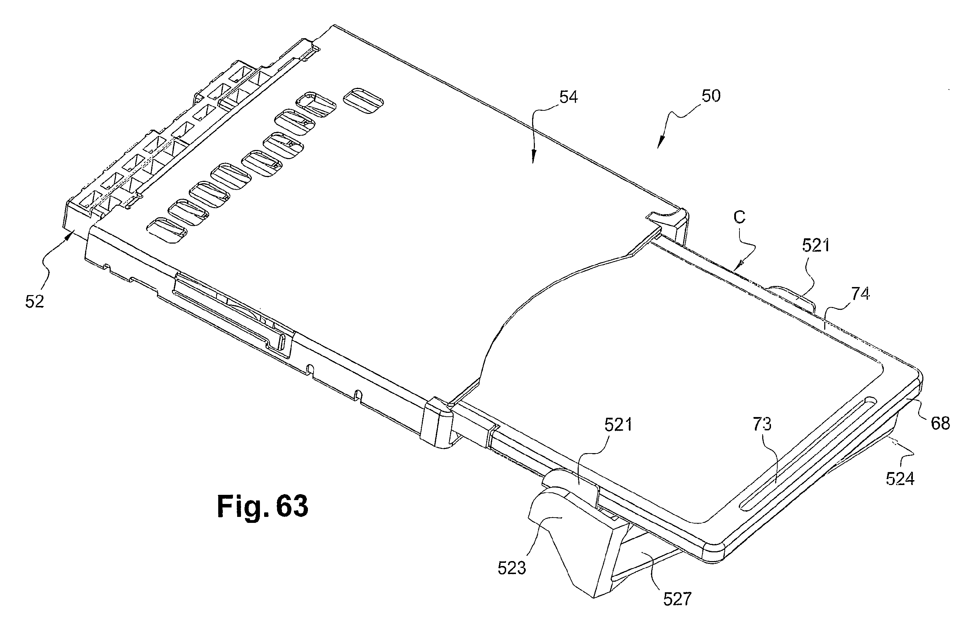

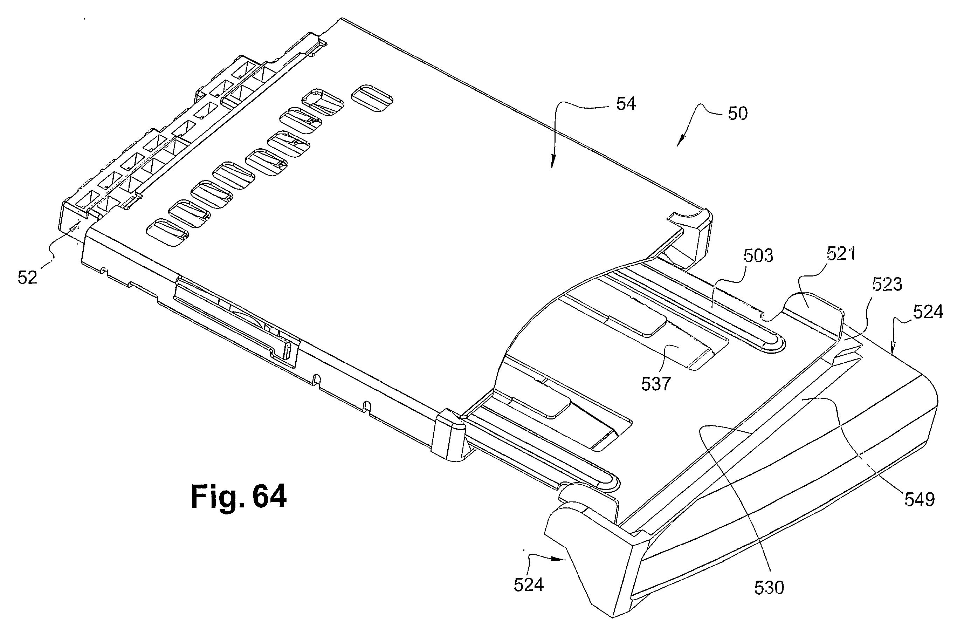

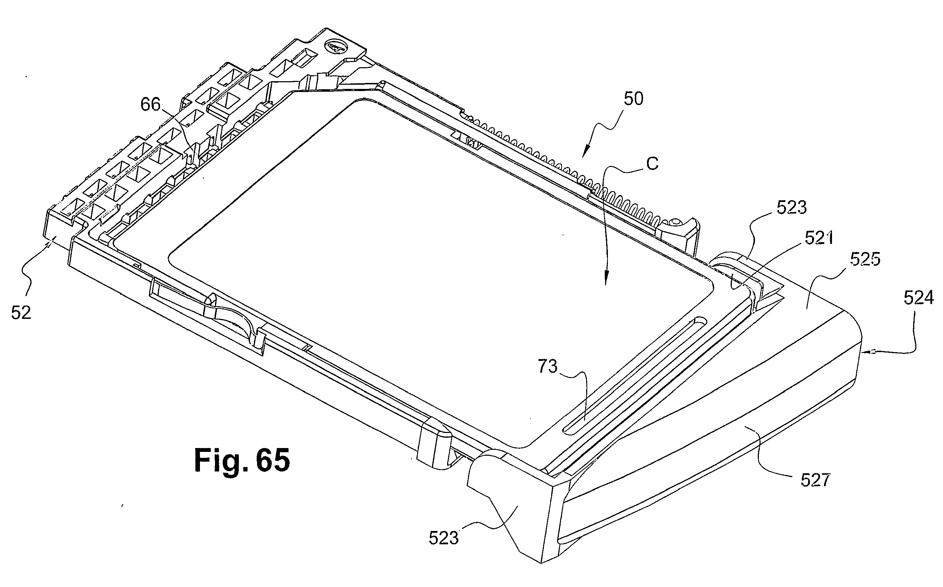

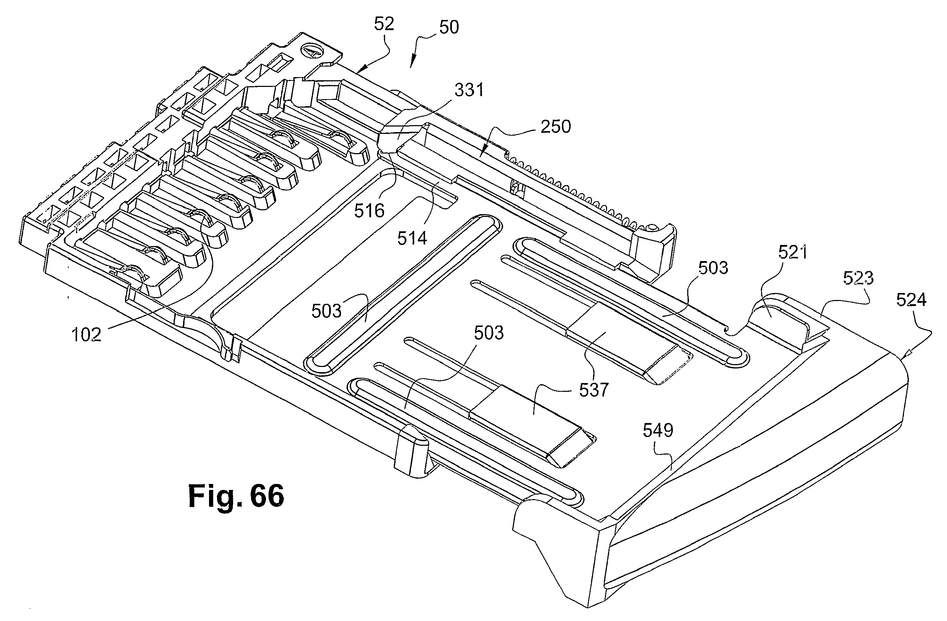

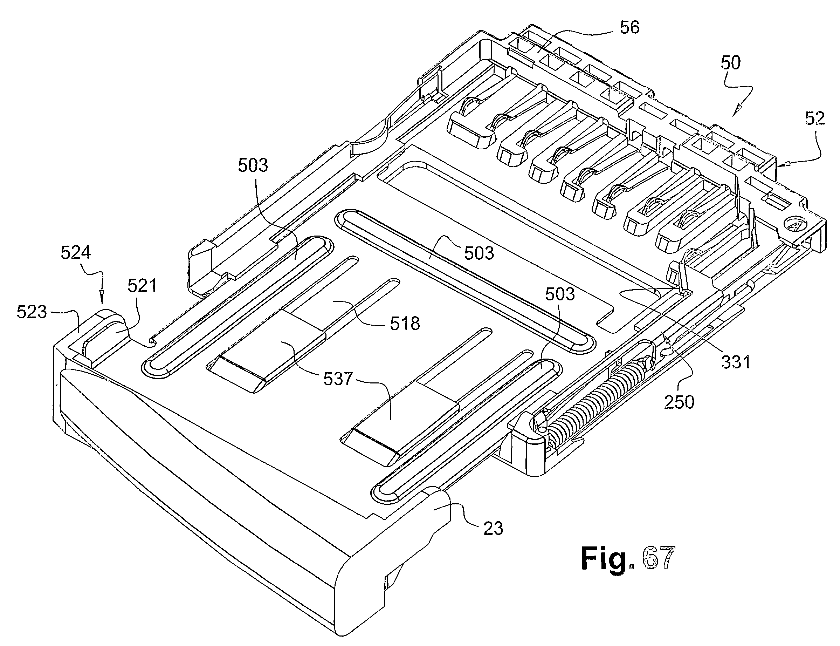

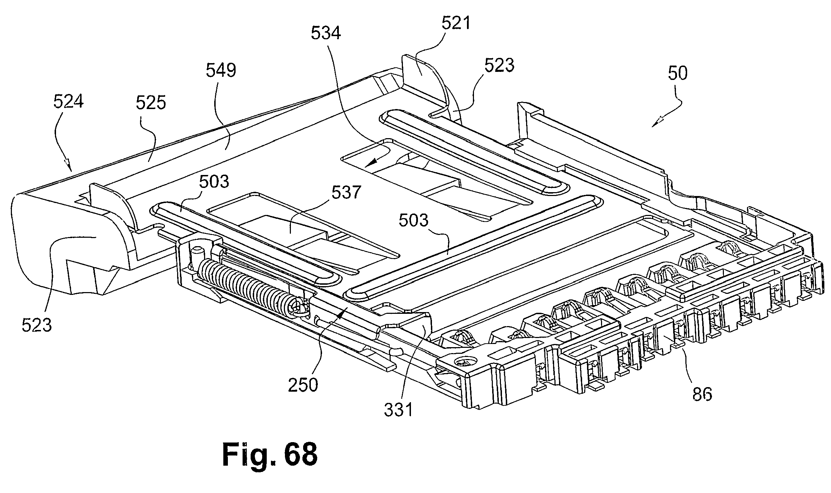

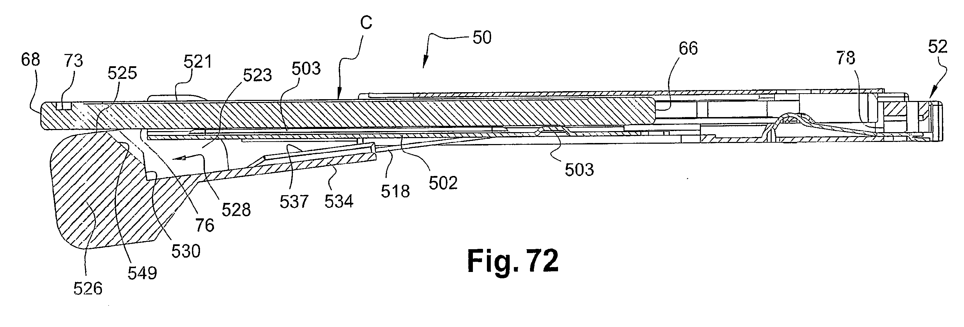

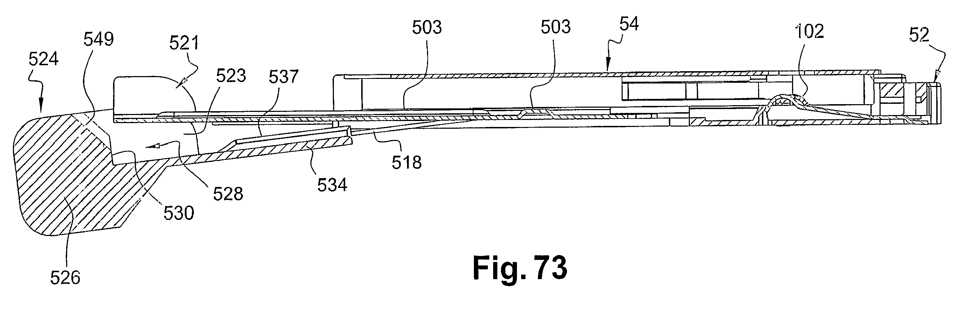

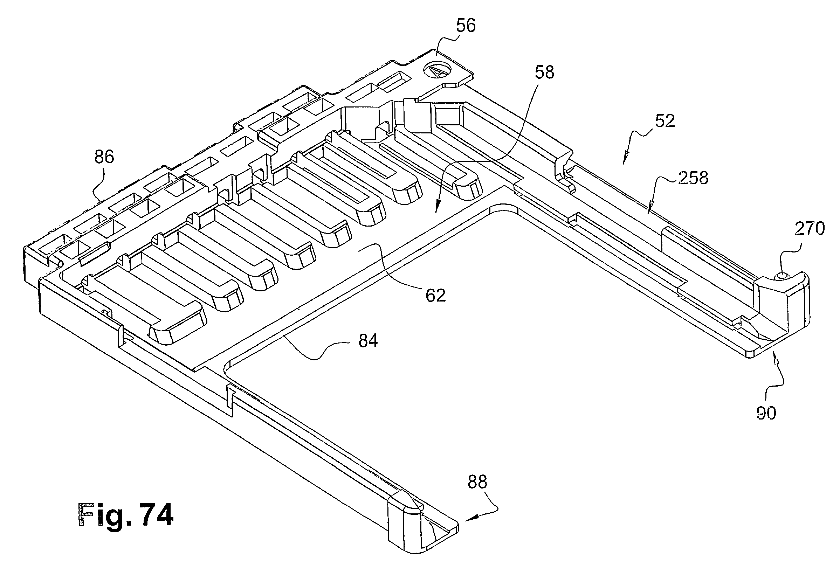

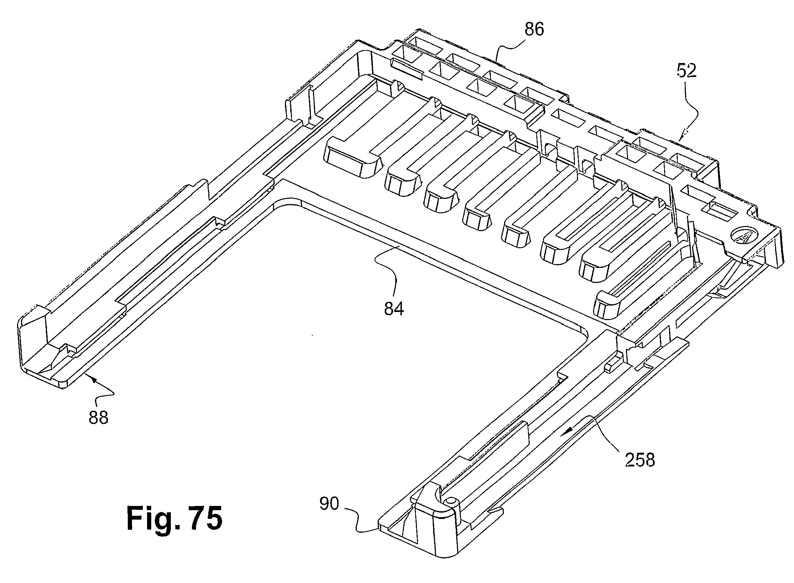

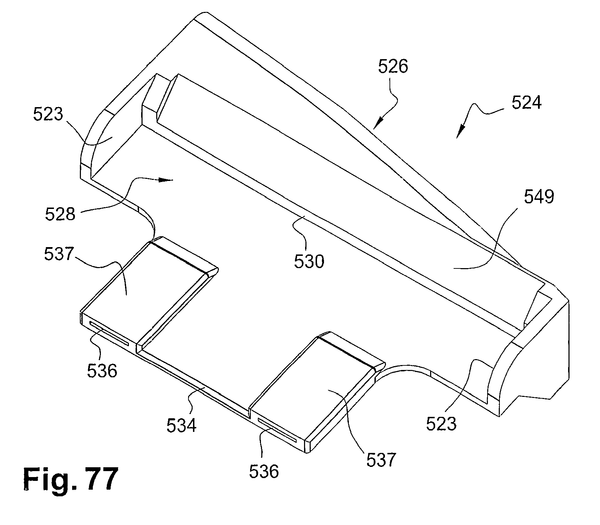

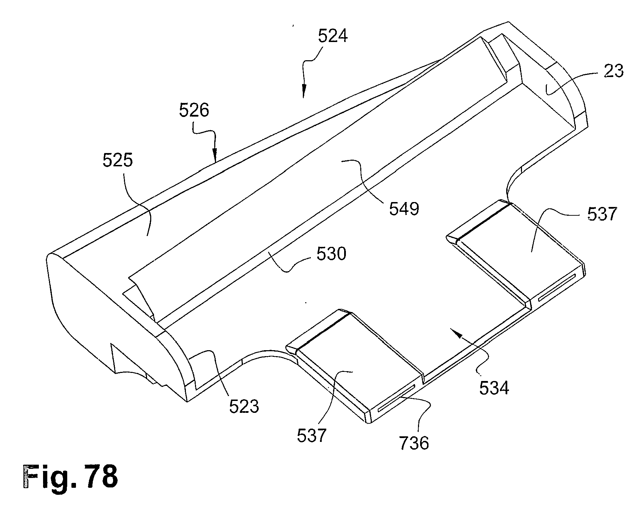

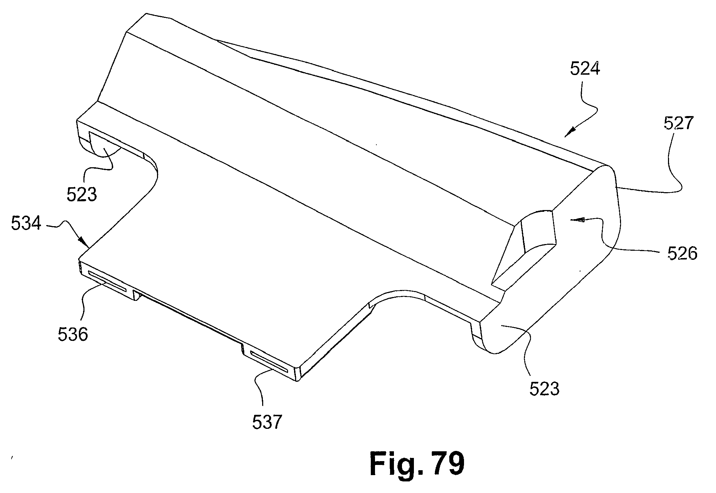

The third embodiment of a connector illustrated in Figures 58 to 79 will now be described in the case of an SD-type card illustrated in Figures 57 and 58.

It will be noted that the entire design that follows is suitable at every point for an MMC card.

The SD card has a 45° corner face 64 for polarization at the intersection of its front transverse edge 66 and its right lateral edge 72 in which here the notch 75 is formed, whereas it has a read/write protect device 77 in its left lateral edge 70.

Near its rear transverse edge 68, the SD card has, in its upper face 74, a notch or slot 73 for making it easier to extract it, and into which slot the user may for example insert a fingernail.

As in the case of the first embodiment, the conducting pads Pi are arranged on the lower face 76 near the transverse front end edge 66 of the card C.

All the ejection means, including in particular the slide 250, are arranged here on the right-hand side.

The general design of the ejection slide 250 and of its card guiding and locking means is similar to that described in document WO-A-02/089040.

The drive branch 331 inclined at 45° is extended vertically downwards by a coupling finger 516.

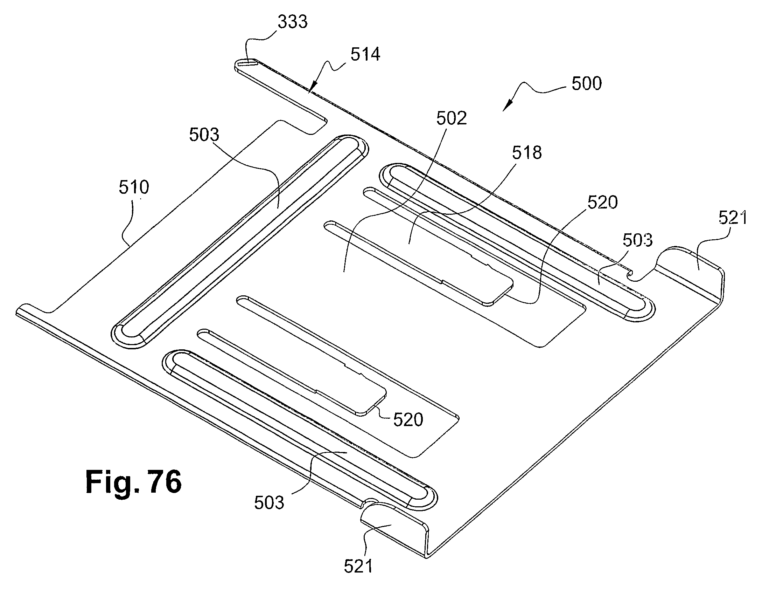

As may be especially seen in Figure 76, the elastically deformable arms 518 are cut out in the body of the central plate 502 that extends rearwards in order to have two vertical lateral flanges 521 of longitudinal orientation between the internal lateral faces against which the card is housed.

The gate is, for example, a plastic moulded part, or a metal casting, which is fixed to the free ends 520 via its front part or extension 534 which has, for this purpose, two slots 536 into which the ends 520 are inserted and crimped.

For aesthetic reasons, the part 524 may be metallized.

It may also be produced by moulding a metal, for example steel, using the MIM (Metal Injection Moulding) technique, which improves the appearance and strength.

The main plate or body 502 of the slider 500 has ribs 503 formed so as to stand up on the upper face of which ribs the lower face of the card C rests.

The slots 536 in the gate 524 are formed in two protuberances 537 which, when the slider is at rest (that is to say when the arms 508 are not deformed), have their horizontal upper faces lying in the same plane as the upper faces of the ribs 503.

The retention bar 526 is bounded towards the front by its front transverse face 530 beyond which, towards the front, the housing 528 is bounded laterally by two vertical longitudinal cheeks 523 between which the flanges 521 of the slider 500 are housed.

The vertically oriented transverse face 530 is of lower height and is extended by a chamfer 549 inclined upwards and rearwards at 45°.

When the card has a groove 73 for making it easier to extract, it is unnecessary to provide a mounted spring for extracting the card from the slider.

To make this operation easier, the vertical face 530 is of very low height so that the user merely has to bear lightly on the bar and then benefits from the ramp effect of the chamber 549 when he is extracting the card longitudinally.

This very low height with the large chamfer also provides an automatic re-engagement effect, perceptible by the user, when fitting the card.

The guiding of the slider 500 as it slides relative to the insulator body 52 of the connector 50 is provided by its lateral edges in the same way as in the second embodiment.

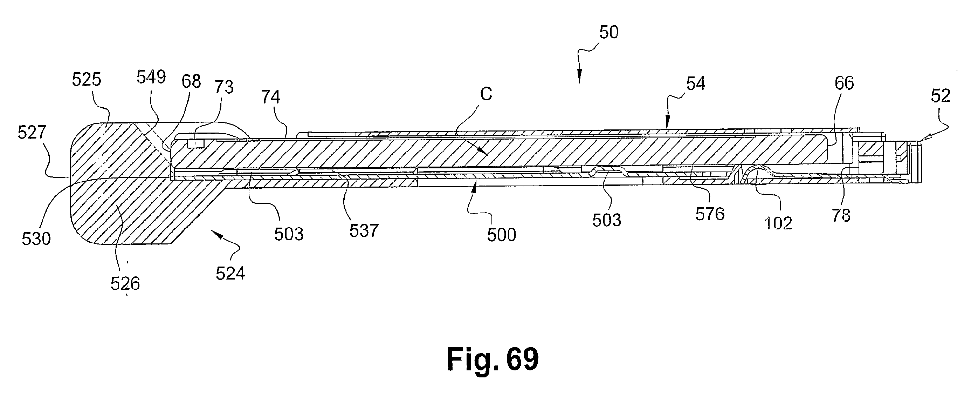

The operation of the slider 500 and of the gate 524, 526 will now be described more particularly with reference to Figures 69 to 73.

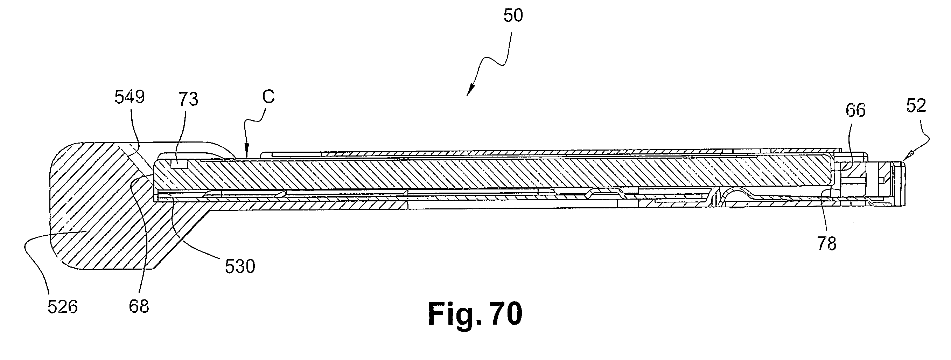

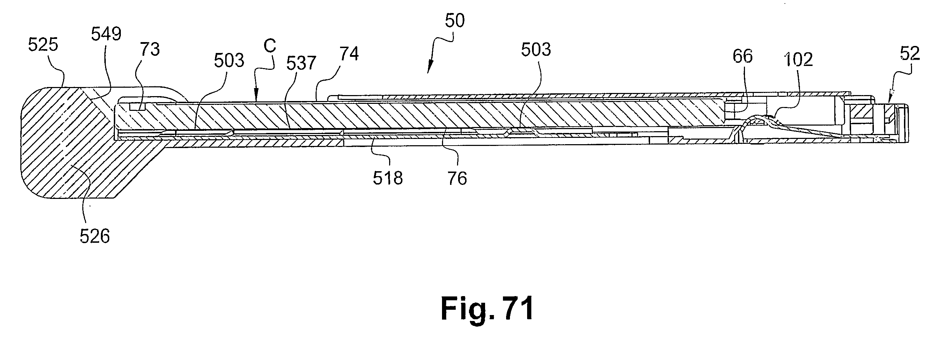

In the pushed-in position (Figure 69), locked position (Figure 70) and ejected rear position (Figure 71) of the locking slide 250, and therefore of the slider 500, the card is retained in the slider 500 by the front transverse face 530.

Once the position illustrated in Figure 71 has been reached, in order to extract the card C from the slider 500, the user carries out a combined movement consisting in lowering the bar 526 of the gate 524 in order to clear the rear transverse face 68, so as to allow the card C to slide longitudinally rearwards.

This movement may be combined with a longitudinal extraction movement by pulling on the card, especially using the groove 73.

This combined movement is aided by the chamfer 549 which cooperates with the lower corner of the rear transverse edge 68 in order to fully lower the bar 526 thanks to the longitudinal pulling force applied to the card C by the user.

The design of the slider 500, with its arms 518 forming long elastic beams, makes it easier, especially compared with the first embodiment, to incorporate this type of connector into certain electronic appliances.

Of course, the total length is slightly increased owing to the presence of the chamfer.

The chamfer 549 also makes it easier to fit a card C into the slider 500 when the latter is in the ejected rear position.

This is because it constitutes a ramp forming a trigger for guiding the insertion of the front transverse edge 66 of the card, the insertion movement causing the gate 524 to swing downwards.

The insertion of the card is also facilitated by the lateral flanges 521, 523 which provide lateral preguiding of the card C.

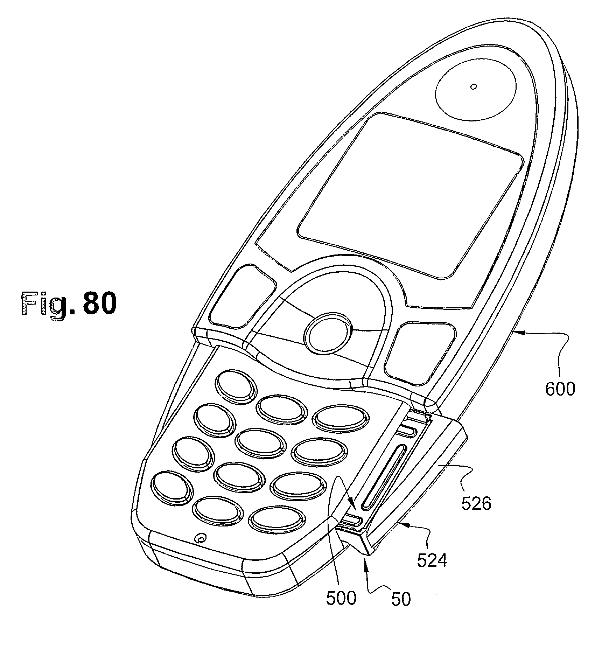

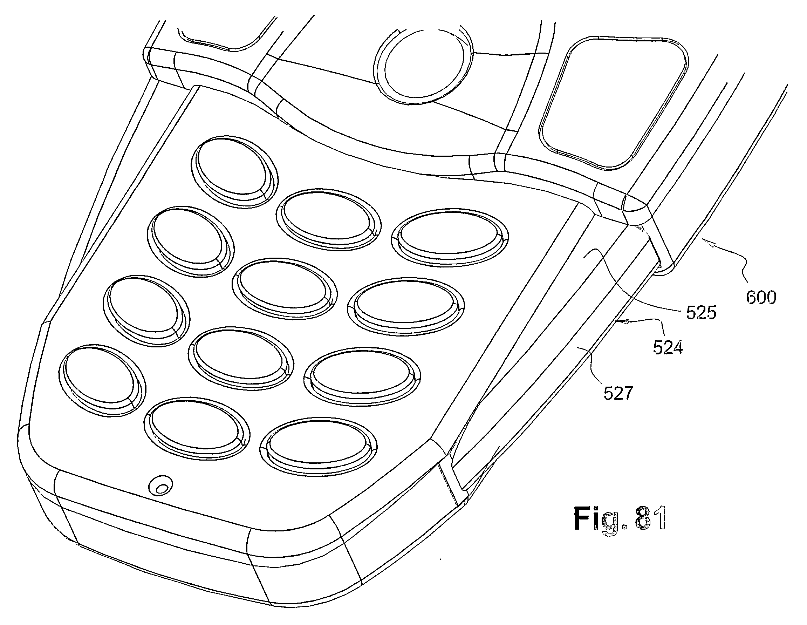

As may be seen in Figures 80 and 81, the external design or style of the bar 526 of the gate 524 is complementary to that of the radio telephone so that, in the "closed" position of the slider and with or without a card, the style of the gate is in perfect harmony with that of the telephone.

The gate is opened by simply pressing on the outer lateral face 527, pressing on it as on a trigger, and then releasing it in order to eject the slider, allowing thereafter either the card to be extracted from the slider or for it to be inserted into the slider.

The radio telephone 600 is a GSM-type telephone for example.

It may have one or more connectors according to the invention, each able to be matched to a different type of card.

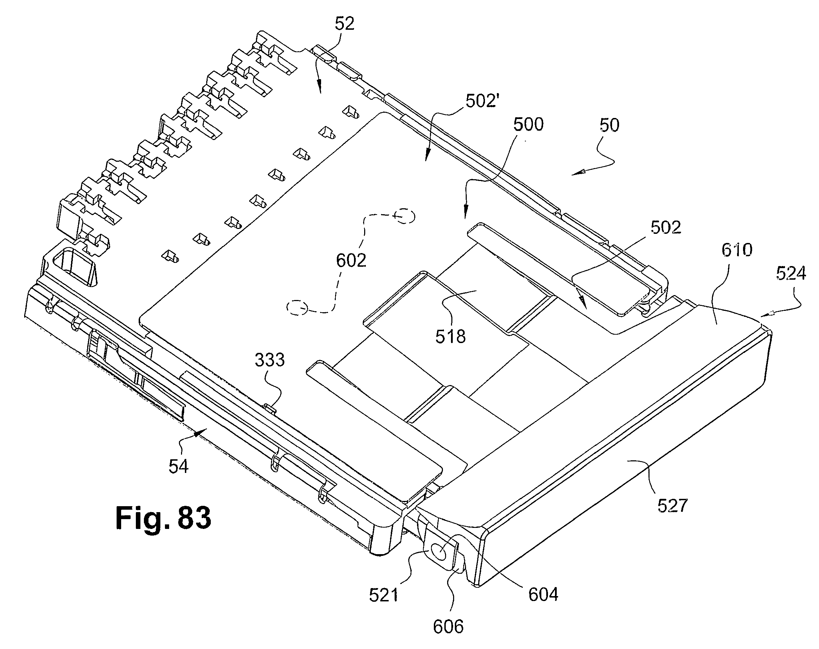

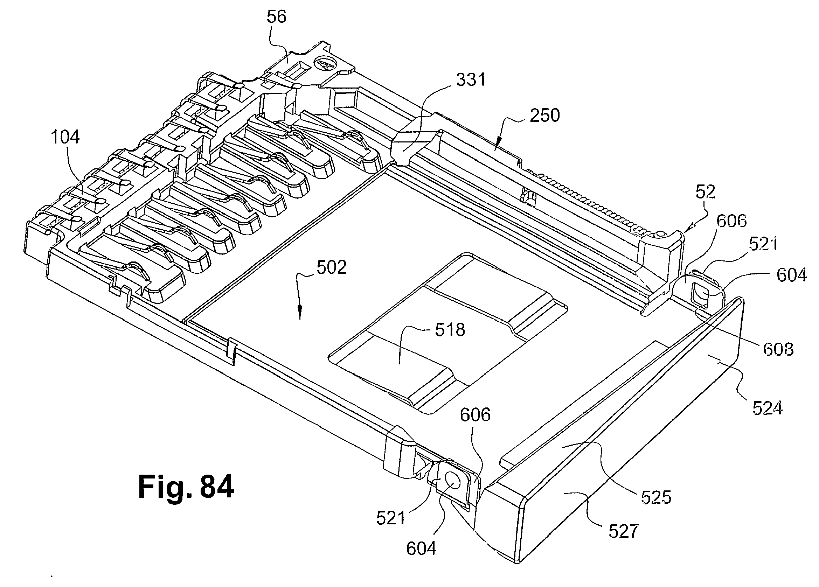

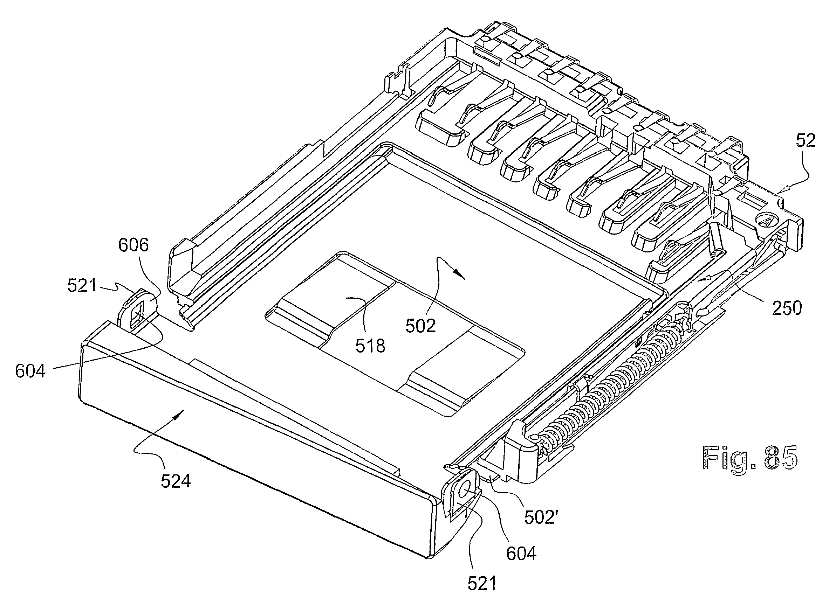

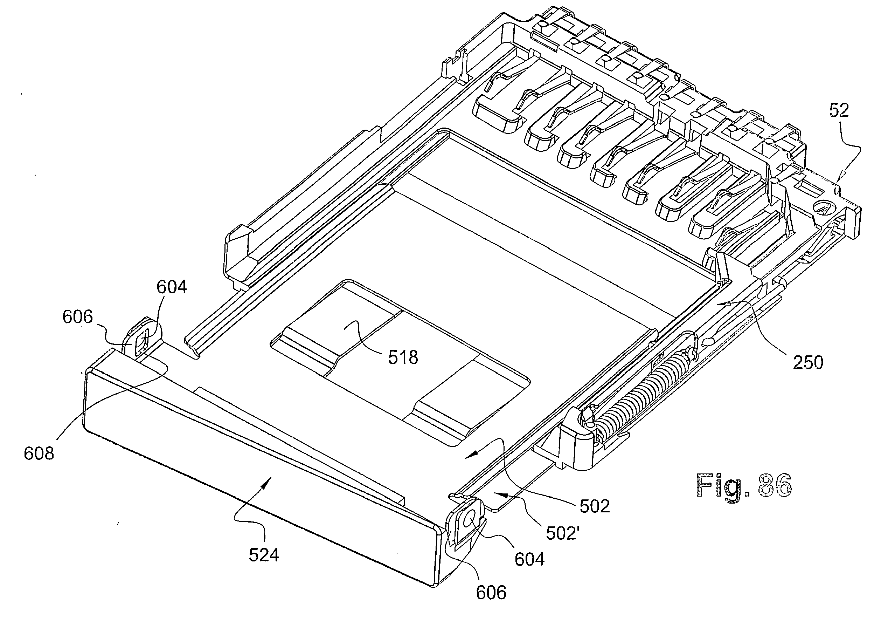

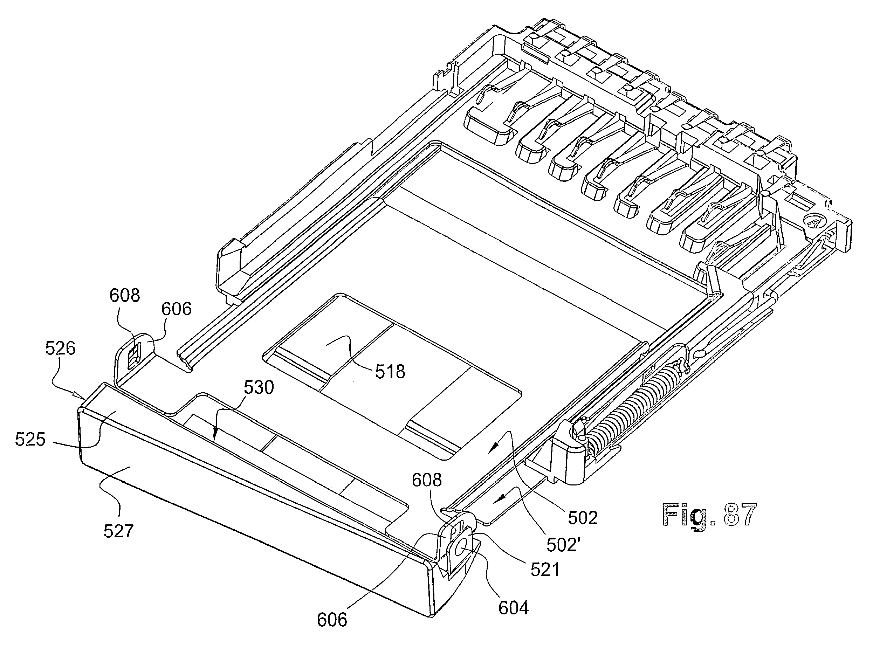

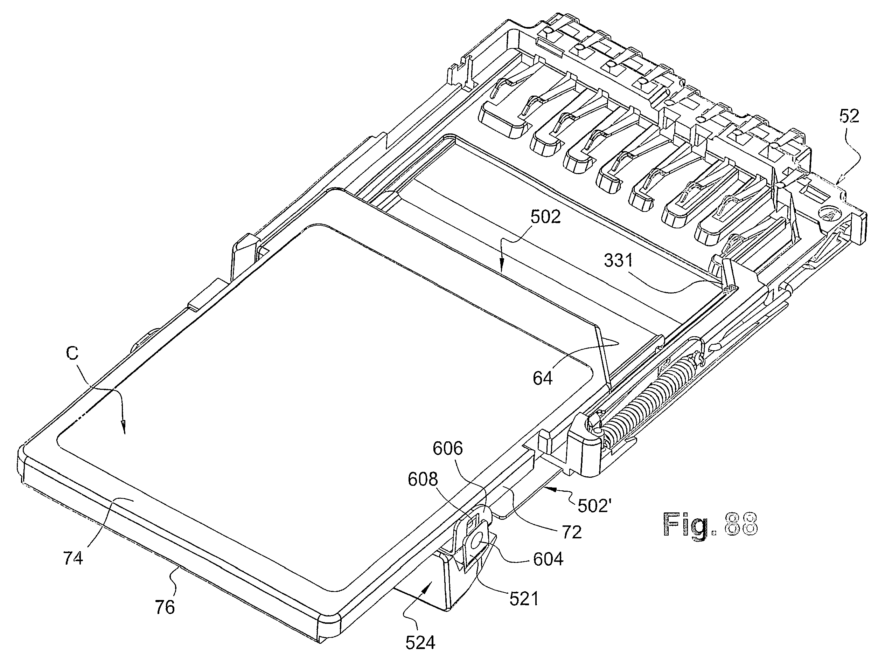

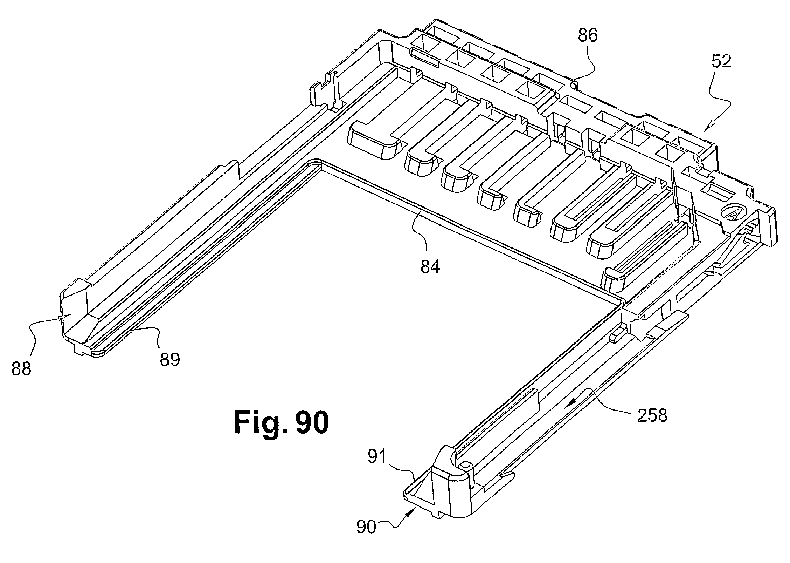

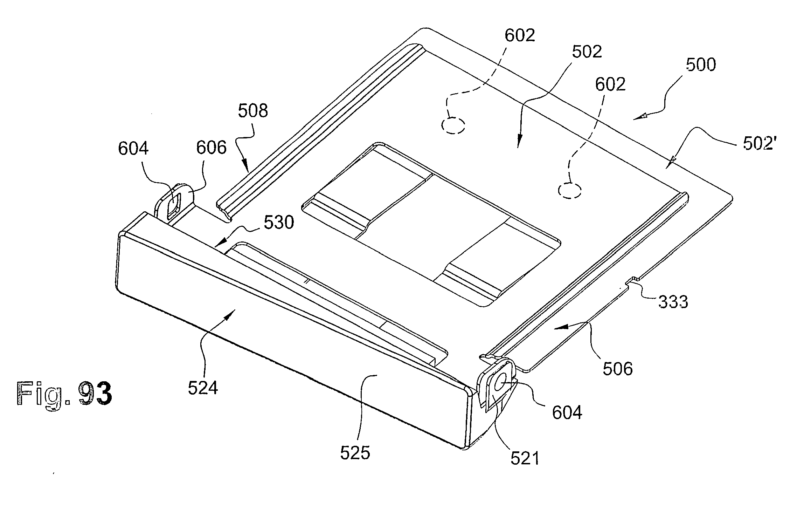

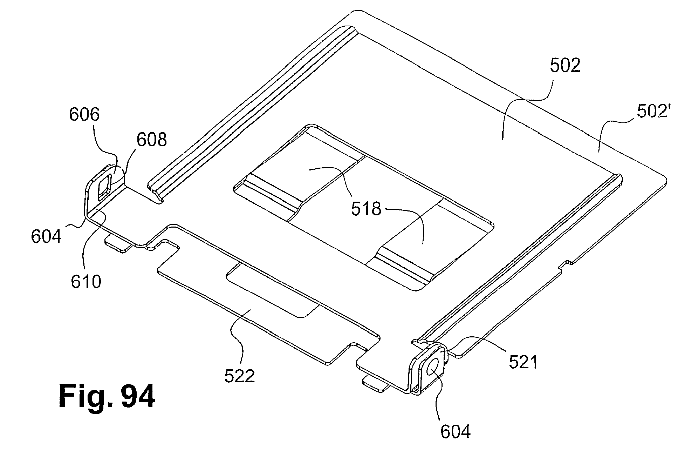

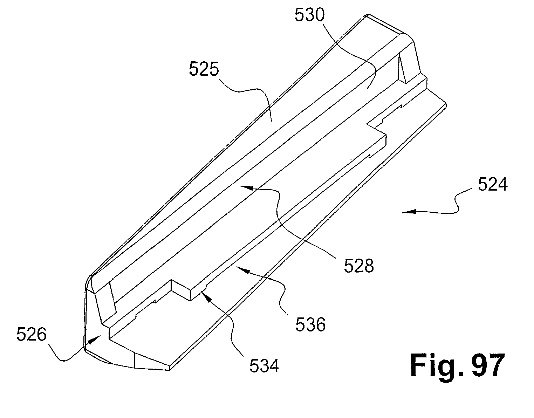

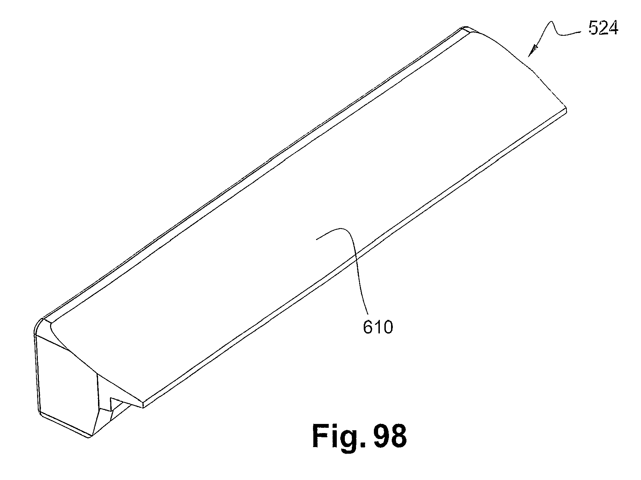

In the fourth embodiment illustrated in Figures 83 to 100, the card is of the SD type with a large thickness (2.1 mm).

The card does not have a groove 73 for making it easier to extract.

The connector 50 is designed to be mounted beneath a card or printed-circuit board (not shown) and, for this purpose, the connection ends 104 of the contact blades 102 are bent upwards in the form of a U so as to extend above the upper face of the connector.

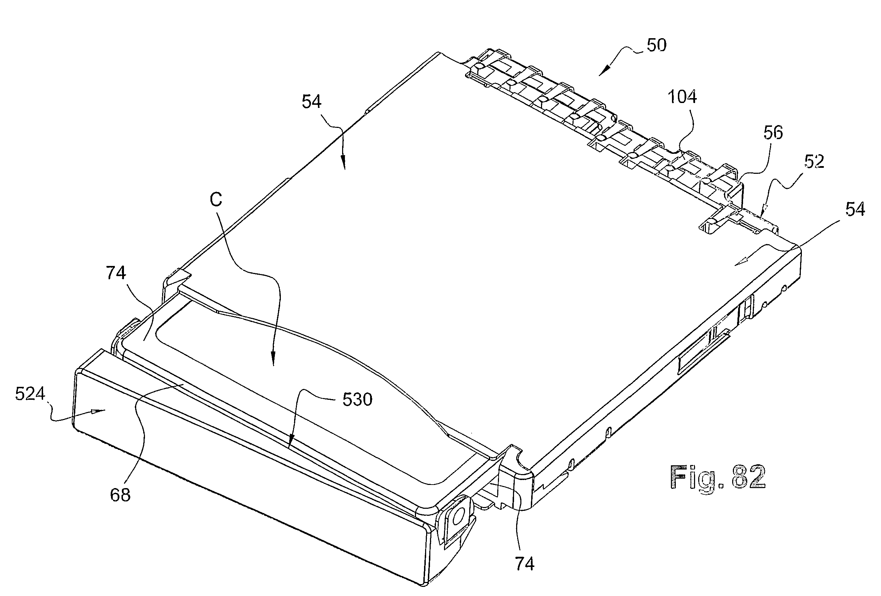

Of course, as may be seen in Figure 82, the tabs 104 do not lie vertically opposite the metal parts of the cover 54.

In this embodiment, the body of the slider 500 consists of two superposed plates 502 and 502' which, for example, are backside-welded or adhesively bonded in regions 602. Any other fastening technique may be envisaged, such as riveting, snap-fastening, etc.

The plates thus defined between them two lateral and longitudinal guiding slideways which receive the inner edges of the arms of the connector.

The arms 518 here are also very long and extended by the rear transverse bar 522 for fixing the gate 524 and by two lateral flanges 521, each having a boss 604 that projects transversely inwards.

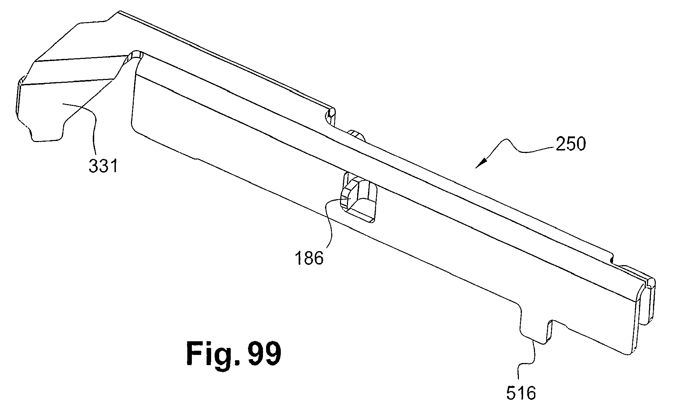

In its right longitudinal lateral edge, the lower plate 502' has the coupling hole or notch 333 that takes the coupling finger 516 belonging to the ejection slide 250 which, as may be seen in Figure 99, is produced here near the rear longitudinal end of the slide.

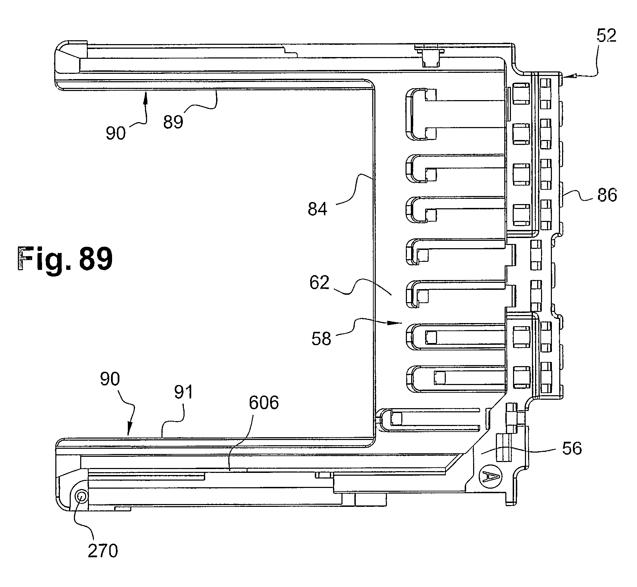

To penetrate the notch 333 of the lower plate 502', the finger 516 passes through a longitudinal slot 606 formed in the insulator body 52 (see Figure 89), the length of which allows the longitudinal displacements or travels of the slide 250 relative to the insulator body 52.

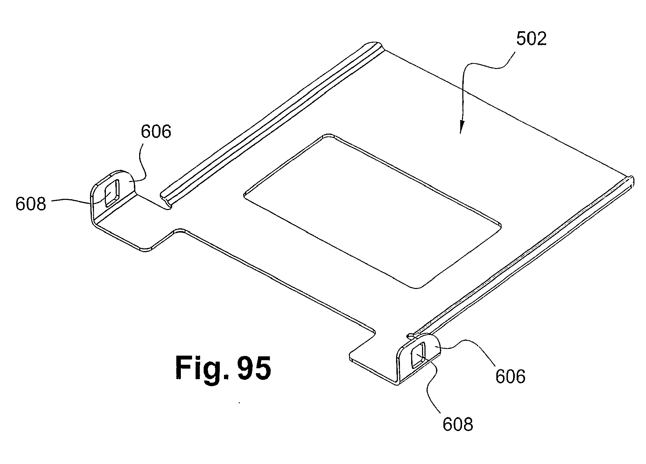

As may be seen in Figure 95, the upper plate 502 also has two longitudinal vertical flanges 606 that are received between the flanges 521 of the lower plate 502", each flange 606 having a window 608 in which an internal boss 604 of a flange 521 is normally housed.

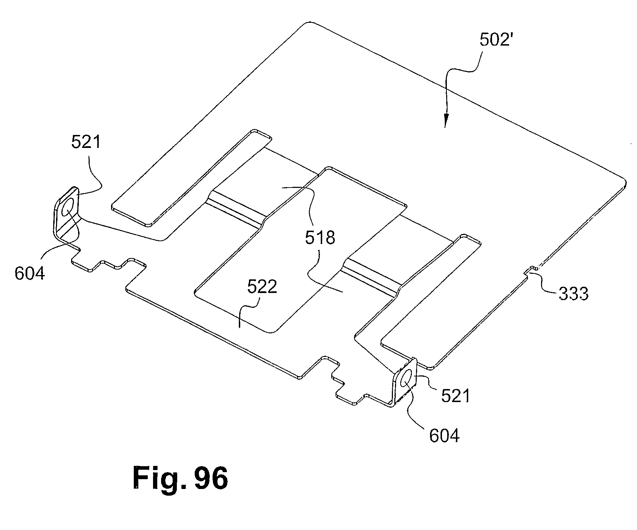

As may be seen in Figures 95 and 96, it is possible to lower the gate 524 with the arms 518 so that the bosses 604 come out of the windows 608 so as to be positioned beneath the lower longitudinal edges 610 of the flanges 606, thus temporarily blocking the gate 524 in the retracted low position.

This solution is advantageous as it makes it easier to extract the card when it does not have grooves in its upper face.

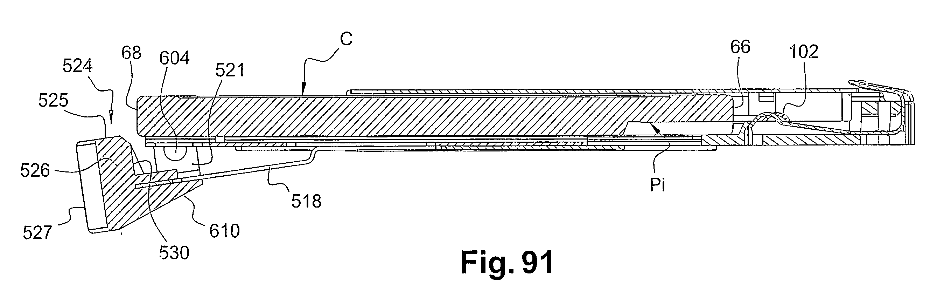

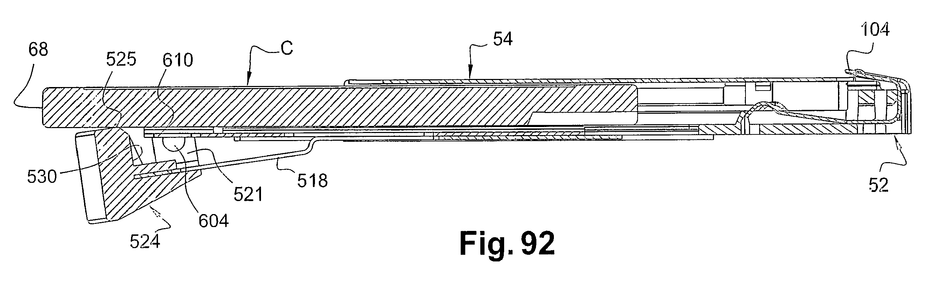

After ejection of the slide and the slider into the rear position, the user therefore starts by lowering the gate down to its blocking position illustrated in Figure 91, and then extracts the card longitudinally as illustrated in Figure 92.

When fitting a card, after the connector has been opened, that is to say when the slide and the slider are in the ejected rear position, the gate is normally in the high position with the bosses 604 housed in the windows 608.

The user can either insert the card directly, by pushing gently downwards on the gate, or, beforehand, lower the gate, temporarily blocking it in the low or lowered position as illustrated in Figures 91 and 92.

In the event of the gate being blocked in this position when the user closes the assembly, he pushes the gate forwards, the gate having an inclined lower ramp 610 that cooperates with a portion (not shown) of the electronic equipment fitted with the connector so as to act as a cam profile that automatically raises the gate with re-engagement of the bosses 604 in the windows 608.

The overall design according to the invention of a retractable mounted gate may, of course, be applied to a connector for a large SIM card having security-protected data stored in its chip.

The design according to the invention provides for a complete autonomous module that groups together the functions of card connector, card-holder carriage with push on/push off locking and unlocking, and gate for closing off the slot in the electronic equipment in which the module is mounted.

In addition, as explained above, the module allows the card to be removed according to a cycle comprising two separate and consecutive controlled steps. During the first step, the user ejects the card-holder carriage with the card, which remains in place in the carriage. During the second step, the user ejects or extracts the card from the slider, in which it was retained by the retention bar.

## Claims

1. Electrical connector (50) of the type:
- comprising a support (52) made of an insulating material that defines a housing (58) for a contact-type smart memory card (C) of rectangular general shape having, on its lower main face (76), a series of conducting pads (Pi), each pad being capable of cooperating with an upper contact end (102) of an electrical contact blade (100), placed in the bottom face of the housing of the support;
- comprising a slide (250) for ejecting the card:
• which can slide longitudinally over the body (52, 258) between an ejected rear rest position towards which it is elastically returned and in which the card (C) may be inserted, or extracted, and a locked forward operating position in which the electrical contact pads (Pi) on the card cooperate with the electrical contact blades (100, 102)
• and which include an active transverse edge (331) with which the front transverse edge (66) of the card (C) cooperates in order to determine the active position of the card with respect to the slide (250); and
- comprising means (256, 265) for locking the slide (250) in the front operating position, against the elastic return force (254) for returning the slide (250) into the rest position, which means are of the type with automatic tripping when the slide (250) reaches its operating position and of the type in which release is caused by forward displacement of the slide (250), beyond its operating position, against the elastic return force;
**characterized in that** the slide (250-500) constitutes a card-holder carriage which, at its rear longitudinal end, carries a retractable bar (524, 526) which normally lies in a longitudinal card retention position, in the active position of the carriage, towards which position it is elastically (518) returned and in which the bar (526, 530) lies facing the rear transverse edge (68) of the card.

2. Connector according to the preceding claim, **characterized in that** the retention bar (526) is mounted so as to move vertically between its retention high position, towards which it is elastically returned, and a retracted low position in which the card (C) can be extracted out of the carriage, in a horizontal overall direction (L1) parallel to the general plane of the card (C), so that the extraction of the card from the connector is effected in a first step of ejection of the carriage and then in a second step of card extraction from the slider (500).

3. Connector according to either of Claims 1 and 2, **characterized in that** the retention bar (526) has a front transverse retention face (530) which, in the retention high position of the card (C), lies vertically substantially facing the rear transverse edge (68) of the card (C).

4. Connector according to any one of the preceding claims, **characterized in that** the card-holder carriage (250-500) is equipped with a spring (337) for assisting the extraction of the card (C) from the card-holder carriage.

5. Connector according to the preceding claim, **characterized in that** the said spring (337) is carried by the card-holder carriage (250-500) and cooperates with the front transverse edge (66) of the card in order to apply a force to it that urges the card longitudinally rearwards by bearing against the retention bar (528, 530) when the latter is in the high card retention position in the card-holder carriage.

6. Connector according to any one of the preceding claims, **characterized in that** the retention bar is carried by the rear longitudinal ends (520) of two elastically deformable arms (518) of the card-holder carriage (250-500) which elastically returns the said bar into its high position.

7. Connector according to any one of the preceding claims, **characterized in that** the card-holder carriage (250-500) has an ejection slide (250) and a card-holder slider (500), in the general form of a horizontal plate (502) which lies beneath the face of the card (C), which slider is linked (333, 516) so as to undergo longitudinal translation with the ejection slide (250).

8. Connector according to the preceding claim taken in combination with Claim 6, **characterized in that** the elastically deformable arms (518) belong to the card-holder slider (500).

9. Connector according to any one of the preceding claims, **characterized in that** it includes retractable means (604, 606, 608, 610) for temporarily blocking the retention bar in the retracted low position.

10. Connector according to any one of the preceding claims, **characterized in that** the retention bar (526) belongs to a rear piece (524) forming a gate which, in the front operating position of the card (C), closes off an opening (540) belonging to a case element forming part of an item of electronic equipment (600, E) in which the connector (50) is mounted.

11. Connector according to the preceding claim, **characterized in that** it is provided with stop means (543, 545) which limit the downward vertical retraction travel of the gate-forming retention bar (524, 526) when the card-holder slider (500, 250) is in the ejected rear position.

12. Connector according to the preceding claim, **characterized in that** the retention bar (526) constitutes an actuating bar (527) on which a user acts by pushing longitudinally forwards in order to lock or release the card-holder carriage (250-500).

13. Connector according to any one of the preceding claims, **characterized in that** the forward travel for unlocking the card-holder carriage is less than its forward travel for unlocking it.

14. Connector according to the preceding claim taken in combination with Claim 10, **characterized in that**, in the locked forward position of the card-holder carriage, the rear transverse face (527) of the gate (524) is approximately flush with the external face (542) of the equipment (E) in which the said opening (540) is formed.

15. Connector according to any one of the preceding claims, **characterized in that** the retention bar (526) is an externally metallized plastic moulded part or a metal injection-moulded part.

16. Connector according to any one of the preceding claims, **characterized in that** it includes a switch which comprises a moving contact blade (519) carried by the carriage (500), which cooperates with one or both of the two, front and rear, fixed blades (102', 102") carried by the insulating body (52) in order to guarantee that, at any point in the card insertion/extraction cycle, the switch always opens before the opening of the electrical circuits and always closes after the closing of the electrical circuits, thus protecting the integrated circuits of the card.

## Patentansprüche

1. Elektrischer Steckverbinder (50) des Typs:
- mit einem aus isolierenden Material hergestellten Träger (52), welcher für eine kontaktspeichernde Chipkarte (C) in einer allgemein rechtwinkeligen Form ein Gehäuse (58) definiert, die - auf ihrer unteren Hauptfläche (76) - eine Reihe von leitenden Kontaktplättchen [Leiterpads] aufweist, wobei jedes Leiterpad in der Lage ist, mit einem oberen Kontakt-Ende (102) von einer elektrischen Kontaktzunge (100) zusammenzuwirken, welche in der Bodenfläche des Trägergehäuses platziert sind;
- mit einer Schubvorrichtung (250) zum Auswerfen der Karte:
• welche sich über dem Körper (52, 258) zwischen einer ausgeworfenen, hinteren Ruheposition, zu der sie elastisch zurückgeführt und die Karte (C) eingesetzt oder herausgezogen werden kann, und einer arretierenden, vorderen Betriebsposition längsseitig verschiebt, in der die elektrischen Kontaktleiterpads [Pi] auf der Karte mit den elektrischen Kontaktzungen zusammenwirken (100, 102),
• und welche einen aktiven Querrand (331) besitzt, mit dem der vordere Querrand (66) der Karte (C) zusammenwirkt, um die aktive Stellung der Karte in Bezug auf die Schubvorrichtung (250) zu ermitteln; und
- mit Mitteln (256, 265) zum Arretieren der Schubvorrichtung (250) in der vorderen Betriebsposition - gegen die elastische Rückführkraft (254) - zum Zurückführen der Schubvorrichtung (250) in die Ruheposition, wobei die Mittel ein automatischer Auslösungstyp sind, wenn die Schubvorrichtung (250) ihre Betriebsposition erreicht, und des Ausführungstyps sind, bei dem eine Freigabe durch eine Verschiebung der Schubvorrichtung (250) nach vorne, die über deren Betriebsposition hinausgeht, gegen die elastische Rückführkraft bewirkt wird;
**dadurch gekennzeichnet, dass** die Schubvorrichtung (250-500) einen Kartenhalter-Beförderungsträger ausbildet, der - am hinteren, longitudinalen Ende - einen einziehbaren Bügel (524, 526) unterstützt, der sich - in der aktiven Position des Beförderungsträgers - normalerweise in einer longitudinalen Kartenrückhalteposition befindet, zu der er elastisch (518) zurückkehren kann, und in welcher der Bügel (526, 530) zur hinteren Querkante (68) der Karte gegenüberliegend angeordnet ist.

2. Steckverbinder gemäß dem vorhergehenden Anspruch, **dadurch gekennzeichnet, dass** der Rückhaltebügel (526) so befestigt ist, dass er zwischen seiner oberen Rückhalteposition, in die er elastisch zurückgeführt wird, und einer unteren, eingezogenen Position, in der die Karte (C) aus dem Beförderungsträger herausgezogen werden kann, insgesamt in einer horizontalen Ausrichtung (L1) angeordnet ist, die zur allgemeinen Kartenebene (C) parallel verläuft, so dass die Entnahme der Karte aus dem Steckverbinder in einem ersten Schritt des Auswerfens aus dem Beförderungsträger ausgeführt wird und dann in einem zweiten Schritt das Kartenherausziehen aus der Schubvorrichtung (500) erfolgt.

3. Steckverbinder gemäß beiden Ansprüchen 1 und 2, **dadurch gekennzeichnet, dass** der Rückhaltebügel (526) eine vordere, querseitige Rückhaltefläche (530) aufweist, die - in der oberen Rückhalteposition der Karte (C) - vertikal und im Wesentlichen gegenüberliegend zur hinteren Querkante (68) der Karte (C) angeordnet ist;

4. Steckverbinder gemäß einen der vorhergehenden Ansprüche, **dadurch gekennzeichnet, dass** der Kartenhalter-Beförderungsträger (250-500) mit einer Feder (337) zum Unterstützen des Herausziehens der Karte (C) aus dem Kartenhalter-Beförderungsträger ausgerüstet ist.

5. Steckverbinder gemäß dem vorhergehenden Anspruch, **dadurch gekennzeichnet, dass** die vorgenannte Feder (337) von dem Kartenhalter-Beförderungsträger (250-500) unterstützend getragen wird und mit dem vorderen Querrand (66) der Karte zusammenwirkt, um auf diesen eine Kraft zu beaufschlagen, welche die Karte durch die Auflagerung auf dem Rückhaltebügel (528, 530) in Längsrichtung nach rückwärts antreibt, wenn sich dieser in der oberen Kartenrückhalteposition in dem Kartenhalter-Beförderungsträger befindet.

6. Steckverbinder gemäß einen der vorhergehenden Ansprüche, **dadurch gekennzeichnet, dass** der Rückhaltebügel (526) von den hinteren, longitudinalen Enden (520) der zwei elastisch verformbaren Tragarme (518) des Kartenhalter-Beförderungsträgers (250-500) überstützend getragen wird, welcher den Bügel in seine obere Stellung elastisch zurückführt;

7. Steckverbinder gemäß einen der vorhergehenden Ansprüche, **dadurch gekennzeichnet, dass** der Kartenhalter-Beförderungsträger (250-500) einen Auswurfschlitten (250) und eine Kartenhalter-Schubvorrichtung (500) allgemein in Form einer horizontalen Platte (502) aufweist, welche sich unterhalb der Kartenfläche (C) befindet, wobei die Schubvorrichtung so verknüpft (333, 516) ist, dass sie sich einer längsseitigen Parallelverschiebung zusammen mit dem Auswurfschlitten (250) unterziehen kann.

8. Steckverbinder gemäß dem vorhergehenden Anspruch in Kombination mit Anspruch 6, **dadurch gekennzeichnet, dass** die elastisch verformbaren Tragarme (518) zur Kartenhalter-Schubvorrichtung (500) gehören.

9. Steckverbinder gemäß einen der vorhergehenden Ansprüche, **dadurch gekennzeichnet, dass** er einziehbare Schwenkmittel (604, 606, 608, 610) zum temporären Arretieren des Rückhaltebügels (526) in der unteren, eingezogenen Position aufweist.

10. Steckverbinder gemäß einen der vorhergehenden Ansprüche, **dadurch gekennzeichnet, dass** der Rückhaltebügel (526) zu einem rückwärtigen Teilstück (524) gehört, welches eine Blende ausbildet, die - in der vorderen Betriebsposition der Karte (C) - eine Öffnung (540) verschließt, die zu einem Gehäuseelement gehört, welches ein Bestandteil einer elektronischen Geräteeinrichtung (600, E) ist, in welcher der Steckverbinder (50) montiert ist;

11. Steckverbinder gemäß dem vorhergehenden Anspruch, **dadurch gekennzeichnet, dass** er mit Anschlagsmitteln (543, 545) bereitgestellt wird, welche die vertikale Einziehrücklaufrichtung des die Blende ausbildenden Rückhaltebügels (524, 526) begrenzt, wenn sich die Kartenhalter-Schubvorrichtung (500, 250) in der hinteren Auswurfsposition befindet.

12. Steckverbinder gemäß dem vorhergehenden Anspruch, **dadurch gekennzeichnet, dass** der Rückhaltebügel (526) einen Betätigungssteg (527) ausbildet, auf den ein Benutzer durch ein longitudinales Schieben nach vorne einwirken kann, um den Kartenhalter-Beförderungsträger (250-500) zu arretieren oder freizugeben.

13. Steckverbinder gemäß einen der vorhergehenden Ansprüche, **dadurch gekennzeichnet, dass** die vordere Laufrichtung zum Arretieren des Kartenhalter-Beförderungsträgers (250-500) kleiner als dessen vordere Laufrichtung für dessen Freigabe aus der Arretierung ist.

14. Steckverbinder gemäß dem vorhergehenden Anspruch in Kombination mit Anspruch 10, **dadurch gekennzeichnet, dass** - in der vorderen, arretierten Position des Kartenhalter-Beförderungsträgers - die rückwärtige Querfläche (527) der Blende (524) mit der Außenfläche (542) der Geräteeinrichtung (E), in welcher die genannte Öffnung (540) ausgebildet ist, ungefähr bündig und formschlüssig ausgerichtet ist.

15. Steckverbinder gemäß einen der vorhergehenden Ansprüche, **dadurch gekennzeichnet, dass** der Rückhaltebügel (526) ein äußerlich metallisiertes Kunststoffformteil oder ein spritzgegossenes Metallformstück ist.

16. Steckverbinder gemäß einen der vorhergehenden Ansprüche, **dadurch gekennzeichnet, dass** er eine Schaltung umfasst, welche eine bewegliche Kontaktzunge (519) aufweist, die durch den Beförderungsträger (500) übertragen wird, welcher mit einer oder mit beiden von den zwei - vorderen und hinteren - feststehenden Kontaktzungen (102', 102") zusammenwirken kann, die in dem Isolierkörper (52) unterstützend getragen werden, um so sicherzustellen, dass sich die Schaltung an jedem Punkt des Karteneinsetz- und Kartenherausziehzyklus vor dem Öffnen der elektrischen Schaltkreise stets öffnet, und sich nach dem Schließen der elektrischen Schaltkreise stets schließt, um so die integrierten Schaltkreise der Karte zu schützen.

## Revendications

1. Connecteur électrique (50) du type :
- comportant un support (52) en matériau isolant qui délimite un logement (58) pour une carte (C) à mémoire à circuit(s) intégré(s) à contact de forme générale rectangulaire ayant dans sa face principale inférieure (76) une série de plages conductrices (Pi) dont chacune est susceptible de coopérer avec une extrémité supérieure (102) de contact d'une lame de contact électrique (100), agencée dans le fond du logement du support;
- comportant un coulisseau (250) d'éjection de la carte :
. qui peut coulisser longitudinalement sur le corps (52, 258) entre une position arrière éjectée de repos vers laquelle il est rappelé élastiquement et dans laquelle la carte (C) peut être mise en place, ou extraite, et une position avant verrouillée d'exploitation dans laquelle les plages de contact électrique (Pi) de la carte coopèrent avec les lames (100, 102) de contact électrique,
. et qui comporte un bord transversal actif (331) avec lequel coopère le bord transversal avant (66) de la carte (C) pour déterminer la position active de la carte par rapport au coulisseau (250),
- et comportant des moyens (256, 265) de verrouillage du coulisseau (250) en position avant d'exploitation, à l'encontre de l'effort élastique de rappel (254) du coulisseau (250) en position de repos, qui sont du type à enclenchement automatique lorsque le coulisseau (250) atteint sa position d'exploitation et du type dont la libération est provoquée par déplacement du coulisseau (250) vers l'avant, au-delà de sa position d'exploitation, à l'encontre de l'effort de rappel élastique ;
**caractérisé en ce que** le coulisseau (250-500) constitue un chariot porte-carte qui, à son extrémité longitudinale arrière, porte une barre escamotable (524, 526) qui s'étend normalement dans une position de retenue longitudinale de la carte, en position active dans le chariot, vers laquelle elle est rappelée élastiquement (518) et dans laquelle la barre (526, 530) s'étend en regard du bord transversal arrière (68) de la carte.

2. Connecteur selon la revendication précédente, **caractérisé en ce que** la barre de retenue (526) est montée mobile verticalement entre sa position haute de retenue, vers laquelle elle est rappelée élastiquement, et une position basse escamotée dans laquelle la carte (C) peut être extraite hors du chariot, selon une direction globalement horizontale (L1) parallèle au plan général de la carte (C), de manière que l'extraction de la carte hors du connecteur s'effectue en une première étape d'éjection du chariot, puis en une deuxième étape d'extraction de la carte hors du tiroir (500).

3. Connecteur selon l'une des revendications 1 ou 2, **caractérisé en ce que** la barre de retenue (526) comporte une face transversale (530) avant de retenue qui, en position haute de retenue de la carte (C), s'étend verticalement sensiblement en regard du bord transversal arrière (68) de la carte (C).

4. Connecteur selon l'une quelconque des revendications précédentes, **caractérisé en ce que** le chariot porte-carte (250-500) est équipé d'un ressort (337) d'aide à l'extraction de la carte (C) hors du chariot porte-carte.

5. Connecteur selon la revendication précédente, **caractérisé en ce que** ledit ressort (337) est porté par le chariot porte-carte (250-500) et coopère avec le bord transversal avant (66) de la carte pour lui appliquer un effort qui sollicite la carte longitudinalement vers l'arrière en appui contre la barre de retenue (528, 530) lorsque cette dernière est en position haute de retenue de la carte dans le chariot porte-carte.

6. Connecteur selon l'une quelconque des revendications précédentes, **caractérisé en ce que** la barre de retenue est portée par les extrémités longitudinales arrière (520) de deux bras (518) déformables élastiquement du chariot porte-carte (250-500) qui la rappelle élastiquement vers sa position haute.

7. Connecteur selon l'une quelconque des revendications précédentes, **caractérisé en ce que** le chariot porte-carte (250-500) comporte un coulisseau d'éjection (250) et un tiroir porte-carte (500), en forme générale de plaque horizontale (502) qui s'étend sous la face de la carte (C), qui est lié (333, 516) en translation longitudinale au coulisseau d'éjection (250).

8. Connecteur selon la revendication précédente prise en combinaison avec la revendication 6, **caractérisé en ce que** les bras déformables élastiquement (518) appartiennent au tiroir porte-carte (500).

9. Connecteur selon l'une quelconque des revendications précédentes, **caractérisé en ce qu'**il comporte des moyens escamotables (604, 606, 608, 610) pour bloquer temporairement la barre de retenue en position basse escamotée.

10. Connecteur selon l'une quelconque des revendications précédentes, **caractérisé en ce que** la barre de retenue (526) appartient à une pièce arrière (524) formant porte qui, en position avant d'exploitation de la carte (C), obture une ouverture (540) appartenant à un élément de boîtier appartenant à un équipement électronique (600, E) dans lequel est monté le connecteur (50).

11. Connecteur selon la revendication précédente, **caractérisé en ce qu'**il est prévu des moyens de butée (543, 545) qui limitent la course d'escamotage vertical vers le bas de la barre de retenue formant porte (524, 526) lorsque le tiroir porte-carte (500, 250) est en position arrière éjectée.

12. Connecteur selon la revendication précédente, **caractérisé en ce que** la barre de retenue (526) constitue une barre d'actionnement (527) sur laquelle un utilisateur agit par une poussée longitudinale d'arrière en avant pour commander le verrouillage ou la libération du chariot porte-carte (250-500).

13. Connecteur selon l'une quelconque des revendications précédentes, **caractérisé en ce que** la course vers l'avant de déverrouillage du chariot porte-carte est inférieure à sa course vers l'avant de déverrouillage.

14. Connecteur selon la revendication précédente prise en combinaison avec la revendication 10, **caractérisé en ce que**, en position avant verrouillée du chariot porte-carte, la face transversale arrière (527) de la porte (524) est sensiblement affleurante avec la face externe (542) de l'équipement (E) dans laquelle est formée ladite ouverture (540).

15. Connecteur selon l'une quelconque des revendications précédentes, **caractérisé en ce que** la barre de retenue (526) est une pièce moulée en matière plastique métallisée extérieurement, ou une pièce moulée en métal.

16. Connecteur selon l'une quelconque des revendications précédentes, **caractérisé en ce qu'**il comporte un commutateur qui comprend une lame de contact mobile (519) portée par le chariot (500) qui coopère avec l'une et/ou l'autre de deux lames fixes avant et arrière (102', 102") portées par le corps isolant (52) pour garantir que, en tout point du cycle d'insertion/extraction d'une carte, le commutateur s'ouvre toujours avant l'ouverture des circuits électriques, et se ferme toujours après la fermeture des circuits électriques, en assurant ainsi la protection des circuits intégrés de la carte.
